# EUROPEAN PATENT APPLICATION

(11) **EP 4 255 057 A1**
(43) Date of publication of application: **04.10.2023**
(21) Application number: 21897847.6
(22) Date of filing: 18.11.2021
(51) Int. Cl.: H04W 64/00, H04W 92/18, H04W 4/40

(54) **COMMUNICATION TERMINAL AND COMMUNICATION SYSTEM**

(30) Priority: 24.11.2020 JP 2020194557
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Meissner Bolte Partnerschaft mbB
(86) International application number: PCT/JP2021/042414
(87) International publication number: WO 2022/113873

(57) **Abstract**

A communication terminal (UE#2) is capable of sidelink communication for directly communicating with another communication terminal (UE#1). When being in coverage of a base station, the communication terminal is given an allocation for executing, on behalf of a higher-level device in a core network, all or part of a location management function (LMF) including a position derivation function that is a function of deriving a position of a communication terminal. The communication terminal executes, based on a result of the sidelink communication with another communication terminal, a positioning function of deriving a position of the other communication terminal, instead of the higher-level device.

## Description

### Field

The present disclosure relates to wireless communication technology.

### Background

In the 3rd Generation Partnership Project (3GPP), which is an association for standardizing mobile communication systems, a communication scheme called Long Term Evolution (LTE) has been developed for wireless sections, and a communication scheme called System Architecture Evolution (SAE) has been developed for overall system configurations including core networks and wireless access networks (hereinafter may be collectively referred to as networks) (for example, see Non Patent Literatures 1 to 5). This type of communication scheme is also called 3.9 Generation (3.9G) systems.

As LTE access schemes, Orthogonal Frequency Division Multiplexing (OFDM) is used for downlink, and Single Carrier Frequency Division Multiple Access (SC-FDMA) is used for uplink. Unlike Wideband Code Division Multiple Access (W-CDMA), LTE does not include circuit switching, but supports only packet communication.

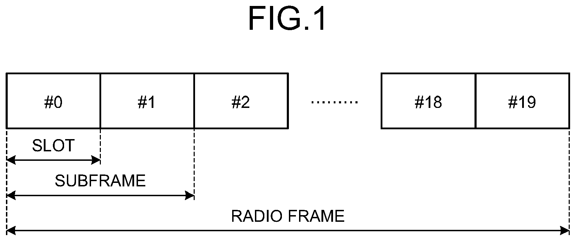

The 3GPP agreements regarding frame configurations for LTE systems described in Non Patent Literature 1 (Chapter 5) will be described with reference to FIG. 1. FIG. 1 is an explanatory diagram illustrating a configuration of a radio frame for use in an LTE-based communication system. In FIG. 1, one radio frame is 10 ms long. A radio frame is divided into 10 equally sized subframes. A subframe is divided into two equally sized slots. Downlink synchronization signals are included in the first and sixth subframes of each radio frame. The synchronization signals are classified as primary synchronization signals (P-SS) and secondary synchronization signals (S-SS).

The 3GPP agreements regarding channel configurations for LTE systems are described in Non Patent Literature 1 (Chapter 5). A closed subscriber group (CSG) cell is assumed to use the same channel configuration as a non-CSG cell.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be simply referred to as "mobile terminals"). BCH transport blocks are mapped to four subframes within a 40 ms interval. There is no explicit signaling for 40 ms timing.

Physical Control Format Indicator Channel (PCFICH) is a channel for downlink transmission from base stations to communication terminals. The PCFICH provides the number of orthogonal frequency division multiplexing (OFDM) symbols for use in PDCCHs from base stations to communication terminals. The PCFICH is transmitted in every subframe.

Physical Downlink Control Channel (PDCCH) is a channel for downlink transmission from base stations to communication terminals. The PDCCH provides resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. The PDCCH carries an uplink scheduling grant. The PDCCH carries acknowledgement (Ack)/negative acknowledgement (Nack) as a response signal to uplink transmission. The PDCCH is also called a L1/L2 control signal.

Physical Downlink Shared Channel (PDSCH) is a channel for downlink transmission from base stations to communication terminals. Downlink shared channel (DL-SCH) and PCH, which are transport channels, are mapped to the PDSCH.

Physical Multicast Channel (PMCH) is a channel for downlink transmission from base stations to communication terminals. Multicast Channel (MCH), which is a transport channel, is mapped to the PMCH.

Physical Uplink Control Channel (PUCCH) is a channel for uplink transmission from communication terminals to base stations. The PUCCH carries Ack/Nack as a response signal to downlink transmission. The PUCCH carries channel state information (CSI). The CSI includes rank indicator (RI), precoding matrix indicator (PMI), and channel quality indicator (CQI) report. The RI is rank information of a MIMO channel matrix. The PMI is information of a precoding weight matrix for use in MIMO. The CQI is quality information indicating the quality of received data or channel quality. The PUCCH also carries a scheduling request (SR).

Physical Uplink Shared Channel (PUSCH) is a channel for uplink transmission from communication terminals to base stations. To the PUSCH, Uplink Shared Channel (UL-SCH) is mapped as one of the transport channels.

Physical Hybrid ARQ (HARQ) Indicator Channel (PHICH) is a channel for downlink transmission from base stations to communication terminals. The PHICH carries Ack/Nack as a response signal to uplink transmission. Physical Random Access Channel (PRACH) is a channel for uplink transmission from communication terminals to base stations. The PRACH carries a random access preamble.

Downlink reference signals (RS) are known as symbols for LTE-based communication systems. The following five types of downlink reference signals are defined: Cell-specific reference signals (CRS), MBSFN reference signals, demodulation reference signals (DM-RS) as UE-specific reference signals, positioning reference signals (PRS), and channel state information reference signals (CSI-RS). Reference signal received power (RSRP) measurement is a measure of the physical layer of communication terminals.

Similarly, uplink reference signals are known as symbols for LTE-based communication systems. The following two types of uplink reference signals are defined: Demodulation reference signals (DM-RS) and sounding reference signals (SRS).

The transport channels described in Non Patent Literature 1 (Chapter 5) will be described. Among the downlink transport channels, Broadcast Channel (BCH) is broadcast to the entire coverage of the base station (cell). The BCH is mapped to Physical Broadcast Channel (PBCH) .

Retransmission control by Hybrid ARQ (HARQ) is applied to Downlink Shared Channel (DL-SCH). The DL-SCH can be broadcast to the entire coverage of the base station (cell). The DL-SCH supports dynamic or semi-static resource allocation. Semi-static resource allocation is also called persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Multicast Channel (MCH) is used for broadcast to the entire coverage of the base station (cell). The MCH supports the SFN combining of multimedia broadcast multicast service (MBMS) services (MTCH and MCCH) in multicell transmission. The MCH supports semi-static resource allocation. The MCH is mapped to the PMCH.

Retransmission control by Hybrid ARQ (HARQ) is applied to Uplink Shared Channel (UL-SCH) among the uplink transport channels. The UL-SCH supports dynamic or semi-static resource allocation. The UL-SCH is mapped to Physical Uplink Shared Channel (PUSCH).

Random Access Channel (RACH) is limited to control information. The RACH has a risk of collision. The RACH is mapped to Physical Random Access Channel (PRACH) .

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

The logical channels described in Non Patent Literature 1 (Chapter 6) will be described. Broadcast Control Channel (BCCH) is a downlink channel for broadcast system control information. The BCCH, which is a logical channel, is mapped to a transport channel: broadcast channel (BCH) or downlink shared channel (DL-SCH).

Paging Control Channel (PCCH) is a downlink channel for transmitting a change in paging information and system information. The PCCH is used when the network does not know the cell location of a communication terminal. The PCCH, which is a logical channel, is mapped to Paging Channel (PCH), which is a transport channel.

Common Control Channel (CCCH) is a channel for transmission control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Multicast Control Channel (MCCH) is a downlink channel for one-to-many transmission. The MCCH is used for transmission of MBMS control information for one or several MTCHs from the network to communication terminals. The MCCH is used only for communication terminals that are receiving MBMS. The MCCH is mapped to the multicast channel (MCH), which is a transport channel.

Dedicated Control Channel (DCCH) is a channel for transmitting dedicated control information between communication terminals and the network on a one-to-one basis. The DCCH is used when the communication terminal is in an RRC connection. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with individual communication terminals for transmitting user information. The DTCH exists in both uplink and downlink. The DTCH is mapped to the uplink shared channel (UL-SCH) in uplink, and is mapped to the downlink shared channel (DL-SCH) in downlink.

Multicast Traffic Channel (MTCH) is a downlink channel for traffic data transmission from the network to communication terminals. The MTCH is a channel used only for communication terminals that are receiving MBMS. The MTCH is mapped to the multicast channel (MCH).

CGI stands for Cell Global Identifier. ECGI stands for E-UTRAN Cell Global Identifier. In LTE, Long Term Evolution-Advanced (LTE-A) described later, and the Universal Mobile Telecommunication System (UMTS), closed subscriber group (CSG) cells are introduced.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas.

3GPP has formulated standards for Long Term Evolution-Advanced (LTE-A) as Release 10 (see Non Patent Literature 3 and Non Patent Literature 4). LTE-A is based on the wireless section communication scheme of LTE, and additionally includes several new technologies.

LTE-A systems employ Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). In the downlink, the carrier corresponding to the PCell is a Downlink Primary Component Carrier (DL PCC). In the uplink, the carrier corresponding to the PCell is an Uplink Primary Component Carrier (UL PCC).

Depending on UE capabilities, a Secondary Cell (SCell) can be configured to form a set of serving cells together with the PCell. In the downlink, the carrier corresponding to the SCell is a Downlink Secondary Component Carrier (DL SCC). In the uplink, the carrier corresponding to the SCell is an Uplink Secondary Component Carrier (UL SCC).

A set of serving cells consisting of one PCell and one or more SCells is configured for one UE.

Other new technologies of LTE-A include technology for supporting wider bands (Wider bandwidth extension), Coordinated Multiple Point transmission and reception (CoMP) technology, and the like. CoMP has been developed for LTE-A in 3GPP, and is described in Non Patent Literature 1.

In addition, 3GPP has developed the use of small eNBs (hereinafter may be referred to as "small base station devices") constituting small cells in order to cope with enormous future traffic. For example, technology for enhancing the efficiency of frequency utilization and increasing the communication capacity by installing a large number of small eNBs and configuring a large number of small cells has been developed. A specific example of this technology is Dual Connectivity (abbreviated as DC), in which a UE is connected to and communicates with two eNBs. DC is described in Non Patent Literature 1.

One of the eNBs involved in dual connectivity (DC) may be referred to as a "master eNB (abbreviated as MeNB)", and the other may be referred to as a "secondary eNB (abbreviated as SeNB)".

There is an increasing trend in the traffic volume of mobile networks, and communication speed is also increasing. Further increase in communication speed is expected after the start of full-scale operation of LTE and LTE-A.

Furthermore, fifth-generation (hereinafter may be referred to as "5G") wireless access systems have been developed for advanced mobile communication and targeted for service launch in 2020 or later. For example, in Europe, requirements for 5G have been compiled by an association called METIS (see Non Patent Literature 5).

The requirements for 5G wireless access systems include 1000 times larger system capacity, 100 times higher data transmission rate, 1/10 lower data processing latency, and 100 times more communication terminals simultaneously connected than LTE systems, so as to achieve further reduction in power consumption and reduction in device cost.

In order to satisfy these requirements, 3GPP has devised 5G standards as Release 15 (see Non Patent Literatures 6 to 19). Technology for 5G wireless sections is referred to as "New Radio Access Technology" ("New Radio" is abbreviated as "NR").

NR systems are being developed based on LTE systems and LTE-A systems, but with the following modifications and additions.

As NR access schemes, OFDM is used for downlink, and OFDM and DFT-spread-OFDM (DFT-s-OFDM) are used for uplink.

NR allows for the use of higher frequencies than LTE to improve transmission speed and reduce processing delay.

NR ensures cell coverage by forming a narrow beam-shaped transmission/reception range (beamforming) and changing the beam direction (beamsweeping).

NR frame configurations support various subcarrier spacings, that is, various numerologies. Regardless of NR numerology, one subframe is one millisecond long, and one slot is composed of 14 symbols. In addition, the number of slots included in one subframe is one in the numerology with a subcarrier spacing of 15 kHz, and increases in proportion to subcarrier spacing in other numerologies (see Non Patent Literature 13 (3GPP TS38.211)).

NR downlink synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.

The base station transmits the SS block of each beam in different beams within the duration of the SS burst. The SS block includes P-SS, S-SS, and PBCH.

NR additionally uses phase tracking reference signals (PTRS) as NR downlink reference signals, so as to reduce the influence of phase noise. As with downlink, uplink reference signals also include PTRS.

NR adds slot format indication (SFI) to the information included in the PDCCH in order to flexibly switch between DL and UL in a slot.

In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.

3GPP has developed various forms of DC: DC by an LTE base station and an NR base station connected to an EPC, DC by NR base stations connected to a 5G core system, and DC by an LTE base station and an NR base station connected to a 5G core system (see Non Patent Literatures 12, 16, and 19).

In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 16, 20, 21, 22, and 23). Examples of services using SL communication include vehicle-to-everything (V2X) services and proximity-based services.

3GPP has also developed several new technologies. An example thereof is positioning technology (see Non Patent Literatures 24 to 26 and 30). As an example of positioning technology, positioning with SL has been developed (see Non Patent Literatures 27 to 29).

### Citation List

### Non Patent Literature

Non Patent Literature 1: 3GPP TS 36.300 V16.2.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.2.0
Non Patent Literature 13: 3GPP TS 38.211 V16.2.0
Non Patent Literature 14: 3GPP TS 38.213 V16.2.0
Non Patent Literature 15: 3GPP TS 38.214 V16.2.0
Non Patent Literature 16: 3GPP TS 38.300 V16.2.0
Non Patent Literature 17: 3GPP TS 38.321 V16.1.0
Non Patent Literature 18: 3GPP TS 38.212 V16.2.0
Non Patent Literature 19: 3GPP TS 38.331 V16.1.0
Non Patent Literature 20: 3GPP TR 23.703 V12.0.0
Non Patent Literature 21: 3GPP TS 23.501 V16.5.0
Non Patent Literature 22: 3GPP TS 23.287 V16.3.0
Non Patent Literature 23: 3GPP TS 23.303 V16.0.0
Non Patent Literature 24: 3GPP TS 38.305 V16.0.0
Non Patent Literature 25: 3GPP TS 23.273 V16.4.0
Non Patent Literature 26: 3GPP RP-202094
Non Patent Literature 27: 3GPP RP-201518
Non Patent Literature 28: 3GPP RP-200898
Non Patent Literature 29: 3GPP RP-201867
Non Patent Literature 30: 3GPP R2-2007629
Non Patent Literature 31: 3GPP TS 36.305 V16.2.0
Non Patent Literature 32: 3GPP R1-2007343
Non Patent Literature 33: 3GPP TR 37.985 V16.0.0

### Summary

### Technical Problem

There are use cases proposed for positioning with SL. However, no method has been disclosed for positioning with SL. Therefore, positioning with SL is inexecutable, resulting in the problem that UE is incapable of positioning in an environment in which only SL communication is available, for example.

In view of the above problem, an object of the present disclosure is to implement a communication terminal capable of positioning with SL.

### Solution to Problem

To solve the above problem and achieve the object, the present disclosure provides a communication terminal capable of sidelink communication for directly communicating with another communication terminal, wherein
when the communication terminal is present in coverage of a base station, the communication terminal is given an allocation for executing, on behalf of a higher-level device in a core network, all or part of a location management function including a position derivation function, the position derivation function being a function of deriving a position of a communication terminal, the communication terminal executing, on a basis of a result of the sidelink communication with another communication terminal, a positioning function of deriving a position of the other communication terminal, instead of the higher-level device.

### Advantageous Effects of Invention

According to the present disclosure, it is possible to implement a communication terminal capable of positioning with SL.

Objects, features, aspects, and advantages of the present disclosure will become more apparent from the following detailed description and the accompanying drawings.

### Brief Description of Drawings

FIG. 1 is an explanatory diagram illustrating a configuration of a radio frame for use in an LTE-based communication system.
FIG. 2 is a block diagram illustrating an overall configuration of an LTE-based communication system 200 discussed in 3GPP.
FIG. 3 is a block diagram illustrating an overall configuration of an NR-based communication system 210 discussed in 3GPP.
FIG. 4 is a diagram illustrating a DC configuration with an eNB and a gNB connected to an EPC.
FIG. 5 is a diagram illustrating a DC configuration with gNBs connected to an NG core.
FIG. 6 is a diagram illustrating a DC configuration with an eNB and a gNB connected to an NG core.
FIG. 7 is a diagram illustrating a DC configuration with an eNB and a gNB connected to an NG core.
FIG. 8 is a block diagram illustrating a configuration of a mobile terminal 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating the procedure from a cell search to an idle operation performed by a communication terminal (UE) in an LTE-based communication system.
FIG. 13 is a diagram illustrating an exemplary configuration of a cell in an NR system.
FIG. 14 is a sequence diagram illustrating an example of a positioning sequence in which a UE performs position calculation in positioning with SL according to a first embodiment.
FIG. 15 is a sequence diagram illustrating another example of a positioning sequence in which a UE performs position calculation in positioning with SL according to the first embodiment.
FIG. 16 is a sequence diagram illustrating another example of a positioning sequence in which a UE performs position calculation in positioning with SL according to the first embodiment.
FIG. 17 is a sequence diagram illustrating another example of a positioning sequence in which a UE performs position calculation in positioning with SL according to the first embodiment.
FIG. 18 is a sequence diagram illustrating another example of a positioning sequence in which a UE performs position calculation in positioning with SL according to the first embodiment.
FIG. 19 is a sequence diagram illustrating another example of a positioning sequence in which a UE performs position calculation in positioning with SL according to the first embodiment.
FIG. 20 is a sequence diagram illustrating an example of a positioning sequence in which a base station performs the position calculation of a UE in positioning with SL according to the first embodiment.
FIG. 21 is a sequence diagram illustrating another example of a positioning sequence in which a base station performs the position calculation of a UE in positioning with SL according to the first embodiment.
FIG. 22 is a sequence diagram illustrating an example of a positioning sequence in which an LMF performs the position calculation of a UE in positioning with SL according to the first embodiment.
FIG. 23 is a diagram illustrating an example in which a UE notifies another UE of the approach to a dangerous spot according to a second embodiment.
FIG. 24 is a diagram illustrating an example in which a UE notifies another UE of the approach according to the second embodiment.
FIG. 25 is a sequence diagram illustrating an operation related to the setting, detection, and notification of an event according to the second embodiment.
FIG. 26 is a diagram illustrating an example case in which overlapping zones are provided in relation to resource pool allocation according to a fourth embodiment.

### Description of Embodiments

### First Embodiment.

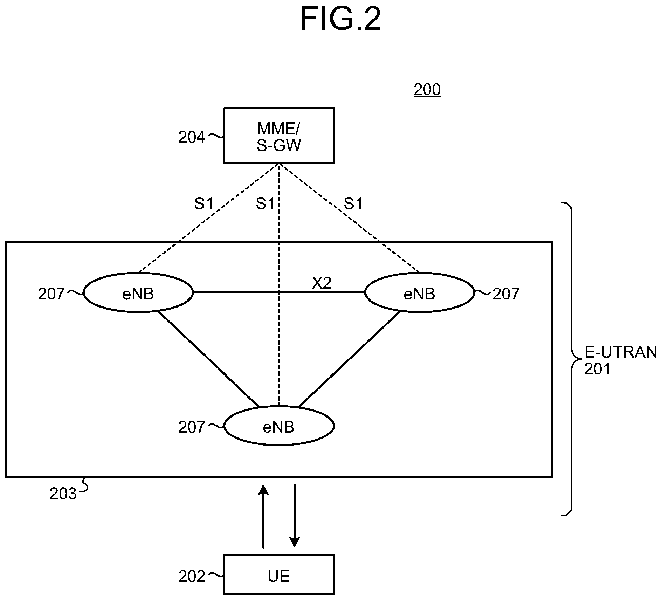

FIG. 2 is a block diagram illustrating an overall configuration of an LTE-based communication system 200 discussed in 3GPP. Below is a description of FIG. 2. The wireless access network is referred to as an Evolved Universal Terrestrial Radio Access Network (E-UTRAN) 201. A mobile terminal device (hereinafter referred to as a "mobile terminal or user equipment (UE)") 202 which is a communication terminal device can wirelessly communicate with a base station device (hereinafter referred to as a "base station or E-UTR_AN NodeB (eNB)") 203, and transmits and receives signals by wireless communication.

Here, "communication terminal devices" include not only mobile terminal devices such as mobile phone terminal devices that can move but also non-moving devices such as sensors. In the following description, a "communication terminal device" may be simply referred to as a "communication terminal".

If the control protocol for the mobile terminal 202, e.g. Radio Resource Control (RRC), and the user plane (hereinafter may be referred to as U-Plane), e.g. Packet Data Convergence Protocol (PDCP), Radio Link Control (RLC), Medium Access Control (MAC), or Physical layer (PHY), terminate at the base station 203, the E-UTR_AN is configured by one or more base stations 203.

The control protocol "Radio Resource Control (RRC)" between the mobile terminal 202 and the base station 203 performs broadcast, paging, RRC connection management, and the like. The states of the base station 203 and the mobile terminal 202 in RRC are classified as RRC_IDLE and

### RRC_CONNECTED.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed.

The base station 203 includes one or more eNBs 207. The system including the Evolved Packet Core (EPC) as a core network and the E-UTRAN 201 as a wireless access network is referred to as the Evolved Packet System (EPS). The EPC as a core network and the E-UTRAN 201 as a wireless access network may be collectively referred to as the "network".

The eNB 207 is connected via an S1 interface to an MME/S-GW unit (hereinafter may be referred to as the "MME unit") 204 including a Mobility Management Entity (MME), a Serving Gateway (S-GW), or the MME and the S-GW, and control information is communicated between the eNB 207 and the MME unit 204. A plurality of MME units 204 may be connected to one eNB 207. Different eNBs 207 are connected by an X2 interface, and control information is communicated between the eNBs 207.

The MME unit 204 is a higher-level device, specifically, a higher-level node, and controls the connection between the eNB 207 as a base station and the mobile terminal (UE) 202. The MME unit 204 constitutes the core network, namely the EPC. The base station 203 constitutes the E-UTRAN 201.

The base station 203 may configure one cell or may configure a plurality of cells. Each cell has a predetermined range forming the coverage in which communication with the mobile terminal 202 is possible, and wirelessly communicates with the mobile terminal 202 within the coverage. In a case where one base station 203 configures a plurality of cells, every single cell is configured to be able to communicate with the mobile terminal 202.

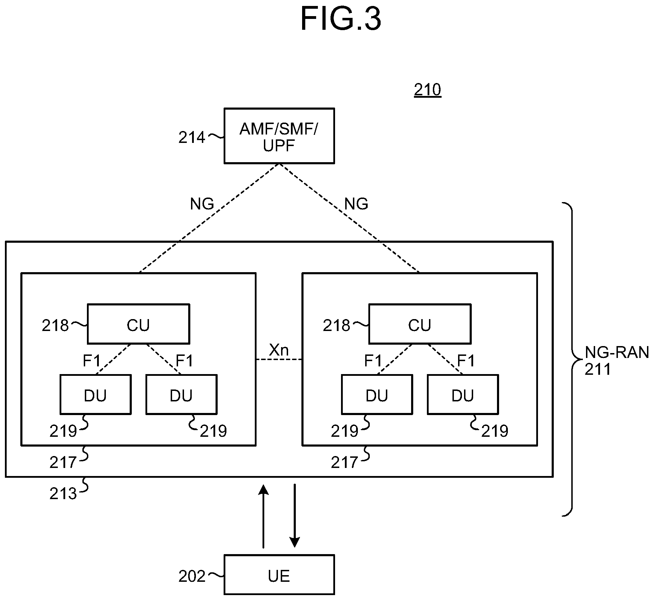

FIG. 3 is a block diagram illustrating an overall configuration of a 5G-based communication system 210 discussed in 3GPP. Below is a description of FIG. 3. The wireless access network is referred to as a Next Generation Radio Access Network (NG-RAN) 211. The UE 202 can wirelessly communicate with an NR base station device (hereinafter referred to as an "NR base station or NG-RAN NodeB (gNB)") 213, and transmits and receives signals by wireless communication. The core network is referred to as the 5G core (5GC).

If the control protocol for the UE 202, e.g. Radio Resource Control (RRC), and the user plane (hereinafter may be referred to as U-Plane), e.g. Service Data Adaptation Protocol (SDAP), Packet Data Convergence Protocol (PDCP), Radio Link Control (RLC), Medium Access Control (MAC), or Physical layer (PHY), terminate at the NR base station 213, the NG-RAN is configured by one or more NR base stations 213.

The function of the control protocol "Radio Resource Control (RRC)" between the UE 202 and the NR base station 213 is similar to that in the LTE. The states of the NR base station 213 and the UE 202 in RRC are classified as RRC_IDLE, RRC_CONNECTED, and RRC_INACTIVE.

RRC_IDLE and RRC_CONNECTED are similar to those in the LTE system. In RRC_INACTIVE, the connection between the 5G core and the NR base station 213 is maintained, and meanwhile system information (SI) broadcast, paging, cell re-selection, mobility, and the like are performed.

A gNB 217 is connected via an NG interface to an AMF/SMF/UPF unit (hereinafter may be referred to as the "5GC unit") 214 including an Access and Mobility Management Function (AMF), a Session Management Function (SMF), a User Plane Function (UPF), or the AMF, SMF, and UPF. Control information and/or user data is communicated between the gNB 217 and the 5GC unit 214. The NG interface is a generic term for the N2 interface between the gNB 217 and the AMF, the N3 interface between the gNB 217 and the UPF, the N11 interface between the AMF and the SMF, and the N4 interface between the UPF and the SMF. A plurality of 5GC units 214 may be connected to one gNB 217. Different gNBs 217 are connected by an Xn interface, and control information and/or user data is communicated between the gNBs 217.

The 5GC unit 214 is a higher-level device, specifically, a higher-level node, and distributes paging signals to one or more base stations 203 and/or base stations 213. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The NR base station 213 may also configure one or more cells similarly to the base station 203. In a case where one NR base station 213 configures a plurality of cells, every single cell is configured to be able to communicate with the UE 202.

The gNB 217 may be divided into a central unit (hereinafter may be referred to as CU) 218 and a distributed unit (hereinafter may be referred to as DU) 219. One CU 218 is configured in the gNB 217. One or more DUs 219 are configured in the gNB 217. The CU 218 is connected to the DU 219 by an F1 interface, and control information and/or user data is communicated between the CU 218 and the DU 219.

In the 5G-based communication system, the Unified Data Management (UDM) function and the Policy Control Function (PCF) described in Non Patent Literature 21 (3GPP TS23.501) may be included. The UDM and/or the PCF may be included in the 5GC unit 214 in FIG. 3.

In the 5G-based communication system, the Location Management Function (LMF) described in Non Patent Literature 24 (3GPP TS38.305) may be provided. The LMF may be connected to the base station via the AMF as disclosed in Non Patent Literature 25 (3GPP TS23.273).

In the 5G-based communication system, the Non-3GPP Interworking Function (N3IWF) described in Non Patent Literature 21 (3GPP TS23.501) may be included. The N3IWF may terminate the Access Network (AN) with the UE in non-3GPP access with the UE.

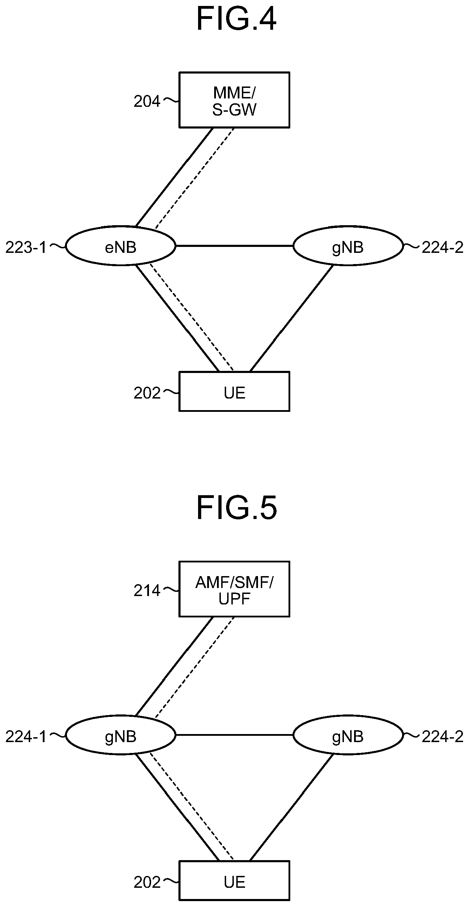

FIG. 4 is a diagram illustrating a DC configuration with an eNB and a gNB connected to an EPC. In FIG. 4, a solid line indicates a U-Plane connection, and a broken line indicates a C-Plane connection. In FIG. 4, the eNB 223-1 serves as a master base station, and the gNB 224-2 serves as a secondary base station (this DC configuration may be referred to as EN-DC). Although FIG. 4 illustrates an example in which the U-Plane connection between the MME unit 204 and the gNB 224-2 is established via the eNB 223-1, the U-Plane connection may be directly established between the MME unit 204 and the gNB 224-2.

FIG. 5 is a diagram illustrating a DC configuration with gNBs connected to an NG core. In FIG. 5, a solid line indicates a U-Plane connection, and a broken line indicates a C-Plane connection. In FIG. 5, the gNB 224-1 serves as a master base station, and the gNB 224-2 serves as a secondary base station (this DC configuration may be referred to as NR-DC). Although FIG. 5 illustrates an example in which the U-Plane connection between the 5GC unit 214 and the gNB 224-2 is established via the gNB 224-1, the U-Plane connection may be directly established between the 5GC unit 214 and the gNB 224-2.

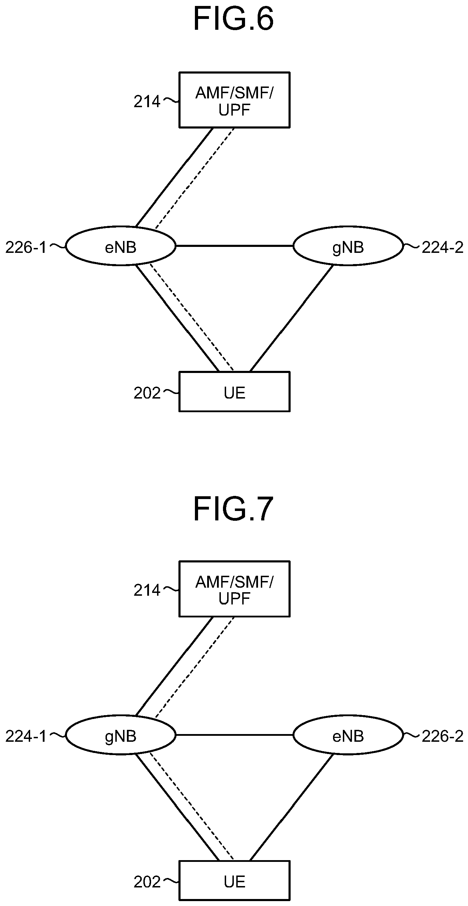

FIG. 6 is a diagram illustrating a DC configuration with an eNB and a gNB connected to an NG core. In FIG. 6, a solid line indicates a U-Plane connection, and a broken line indicates a C-Plane connection. In FIG. 6, the eNB 226-1 serves as a master base station, and the gNB 224-2 serves as a secondary base station (this DC configuration may be referred to as NG-EN-DC). Although FIG. 6 illustrates an example in which the U-Plane connection between the 5GC unit 214 and the gNB 224-2 is established via the eNB 226-1, the U-Plane connection may be directly established between the 5GC unit 214 and the gNB 224-2.

FIG. 7 is a diagram illustrating another DC configuration with an eNB and a gNB connected to an NG core. In FIG. 7, a solid line indicates a U-Plane connection, and a broken line indicates a C-Plane connection. In FIG. 7, the gNB 224-1 serves as a master base station, and the eNB 226-2 serves as a secondary base station (this DC configuration may be referred to as NE-DC). Although FIG. 7 illustrates an example in which the U-Plane connection between the 5GC unit 214 and the eNB 226-2 is established via the gNB 224-1, the U-Plane connection may be directly established between the 5GC unit 214 and the eNB 226-2.

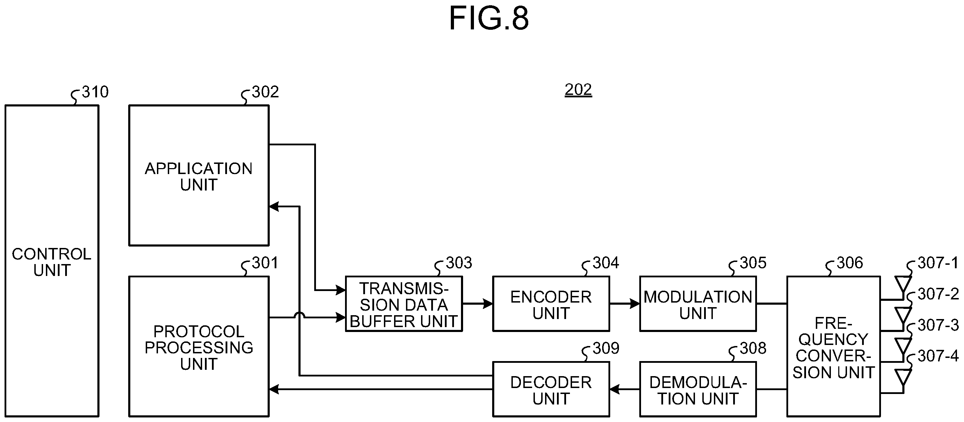

FIG. 8 is a block diagram illustrating a configuration of the mobile terminal 202 illustrated in FIG. 2. A transmission process in the mobile terminal 202 illustrated in FIG. 8 will be described. First, control data from a protocol processing unit 301 and user data from an application unit 302 are saved in a transmission data buffer unit 303. The data saved in the transmission data buffer unit 303 is passed to an encoder unit 304 and subjected to encoding such as error correction. Some data may be directly output from the transmission data buffer unit 303 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 203. FIG. 8 illustrates the case where the number of antennas is four, but the number of antennas is not limited to four.

A reception process in the mobile terminal 202 is executed as follows. Wireless signals from the base station 203 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. Among the decoded data, the control data is passed to the protocol processing unit 301, and the user data is passed to the application unit 302. A series of processes of the mobile terminal 202 is controlled by a control unit 310. Therefore, the control unit 310 is connected to the respective units 301 to 309, which is not illustrated in FIG. 8. The control unit 310 is implemented by, for example, processing circuitry including a processor and a memory. That is, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used for transmission and the number of antennas used for reception by the mobile terminal 202 may be the same or different.

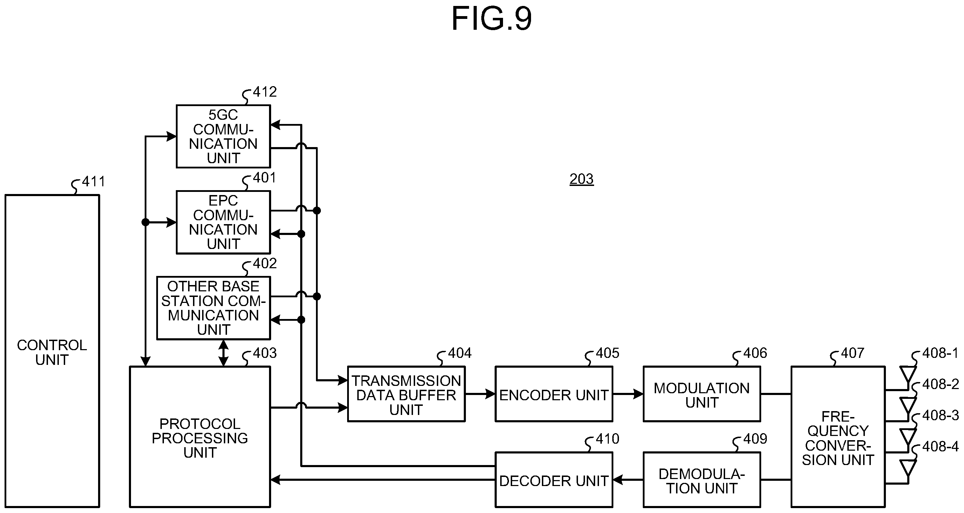

FIG. 9 is a block diagram illustrating a configuration of the base station 203 illustrated in FIG. 2. A transmission process in the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other base station communication unit 402 transmits and receives data to and from other base stations. The EPC communication unit 401, the 5GC communication unit 412, and the other base station communication unit 402 each exchange information with a protocol processing unit 403. Control data from the protocol processing unit 403 and user data and control data from the EPC communication unit 401, the 5GC communication unit 412, and the other base station communication unit 402 are saved in a transmission data buffer unit 404.

The data saved in the transmission data buffer unit 404 is passed to an encoder unit 405 and subjected to encoding such as error correction. Some data may be directly output from the transmission data buffer unit 404 to a modulation unit 406 without being subjected to encoding. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 9 illustrates the case where the number of antennas is four, but the number of antennas is not limited to four.

A reception process in the base station 203 is executed as follows. Wireless signals from one or more mobile terminals 202 are received by the antennas 408. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. Among the decoded data, the control data is passed to the protocol processing unit 403, the 5GC communication unit 412, the EPC communication unit 401, or the other base station communication unit 402, and the user data is passed to the 5GC communication unit 412, the EPC communication unit 401, or the other base station communication unit 402. A series of processes of the base station 203 is controlled by a control unit 411. Therefore, the control unit 411 is connected to the respective units 401 to 410 and 412, which is not illustrated in FIG. 9. Similarly to the control unit 310 of the mobile terminal 202 described above, the control unit 411 is implemented by processing circuitry including a processor and a memory, or by dedicated processing circuitry such as FPGA, ASIC, or DSP. In FIG. 9, the number of antennas used for transmission and the number of antennas used for reception by the base station 203 may be the same or different.

The block diagram of FIG. 9 illustrating the configuration of the base station 203 may also apply to the configuration of the base station 213. In addition, in FIGS. 8 and 9, the number of antennas of the mobile terminal 202 and the number of antennas of the base station 203 may be the same or different.

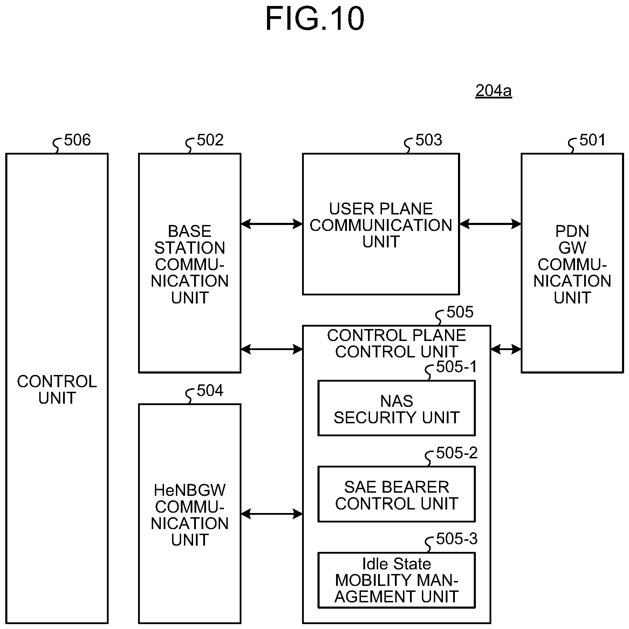

FIG. 10 is a block diagram illustrating a configuration of an MME. FIG. 10 depicts the configuration of the MME 204a included in the MME unit 204 illustrated in FIG. 2 described above. A PDN GW communication unit 501 transmits and receives data between the MME 204a and a Packet Data Network Gateway (PDN GW). A base station communication unit 502 transmits and receives data by means of the S1 interface between the MME 204a and the base station 203. If the data received from the PDN GW is user data, the user data is passed from the PDN GW communication unit 501 to the base station communication unit 502 via a user plane communication unit 503 and transmitted to one or more base stations 203. If the data received from the base station 203 is user data, the user data is passed from the base station communication unit 502 to the PDN GW communication unit 501 via the user plane communication unit 503 and transmitted to the PDN GW.

If the data received from the PDN GW is control data, the control data is passed from the PDN GW communication unit 501 to a control plane control unit 505. If the data received from the base station 203 is control data, the control data is passed from the base station communication unit 502 to the control plane control unit 505.

A HeNBGW communication unit 504 transmits and receives data between the MME 204a and a Home-eNB Gateway (HeNB GW). The control data received by the HeNBGW communication unit 504 from the HeNB GW is passed to the control plane control unit 505. The HeNBGW communication unit 504 transmits the control data input from the control plane control unit 505 to the HeNB GW.

The control plane control unit 505 includes a NAS security unit 505-1, an SAE bearer control unit 505-2, an Idle State mobility management unit 505-3, and the like, and performs general processing on the control plane (hereinafter may be referred to as C-Plane). The NAS security unit 505-1 ensures security of Non-Access Stratum (NAS) messages and the like. The SAE bearer control unit 505-2 manages bearers of System Architecture Evolution (SAE) and the like. The Idle State mobility management unit 505-3 performs, for example: mobility management in the idle state (also referred to as LTE-IDLE state or simply as idle); generation and control of paging signals in the idle state; and addition, deletion, update, and search of tracking areas and management of tracking area lists for one or more mobile terminals 202 under control.

The MME 204a distributes paging signals to one or more base stations 203. The MME 204a also performs mobility control in the idle state. The MME 204a manages a tracking area list when the mobile terminal 202 is in the idle state and the active state. The MME 204a starts the paging protocol by transmitting a paging message to a cell belonging to a tracking area in which the mobile terminal 202 is registered. The CSG management, CSG ID management, and whitelist management for the eNB 207 connected to the MME 204a may be performed by the Idle State mobility management unit 505-3.

A series of processes of the MME 204a is controlled by a control unit 506. Therefore, the control unit 506 is connected to the respective units 501 to 505, which is not illustrated in FIG. 10. Similarly to the control unit 310 of the mobile terminal 202 described above, the control unit 506 is implemented by processing circuitry including a processor and a memory, or by dedicated processing circuitry such as FPGA, ASIC, or DSP.

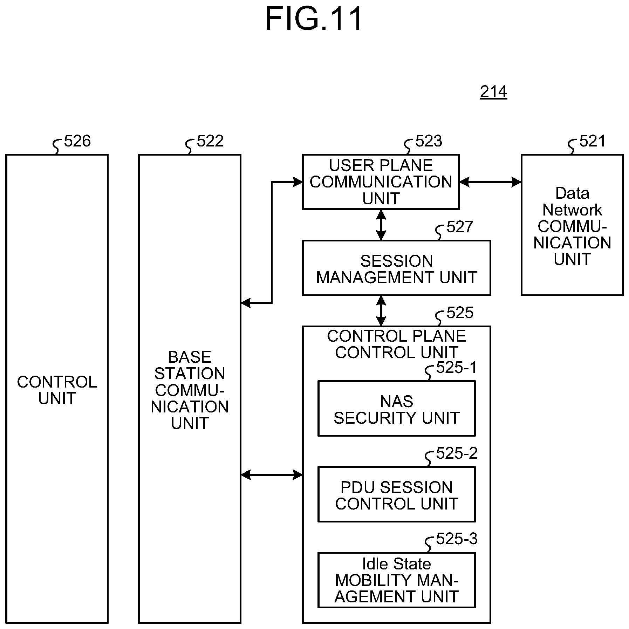

FIG. 11 is a block diagram illustrating a configuration of a 5GC unit. FIG. 11 depicts the configuration of the 5GC unit 214 illustrated in FIG. 3 described above. FIG. 11 depicts a case where an AMF configuration, an SMF configuration, and a UPF configuration are included in the 5GC unit 214 illustrated in FIG. 5. A Data Network communication unit 521 transmits and receives data between the 5GC unit 214 and the Data Network. A base station communication unit 522 transmits and receives data by means of the S1 interface between the 5GC unit 214 and the base station 203 and/or by means of the NG interface between the 5GC unit 214 and the base station 213. If the data received from the Data Network is user data, the user data is passed from Data Network communication unit 521 to the base station communication unit 522 via a user plane communication unit 523 and transmitted to one or more base stations 203 and/or base stations 213. If the data received from the base station 203 and/or the base station 213 is user data, the user data is passed from the base station communication unit 522 to the Data Network communication unit 521 via the user plane communication unit 523 and transmitted to the Data Network.

If the data received from the Data Network is control data, the control data is passed from the Data Network communication unit 521 to a session management unit 527 via the user plane communication unit 523. The session management unit 527 passes the control data to a control plane control unit 525. If the data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an Idle State mobility management unit 525-3, and the like, and performs general processing on the control plane (hereinafter may be referred to as C-Plane). The NAS security unit 525-1 ensures security of Non-Access Stratum (NAS) messages and the like. The PDU session control unit 525-2 manages a PDU session between the mobile terminal 202 and the 5GC unit 214. The Idle State mobility management unit 525-3 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 11. Similarly to the control unit 310 of the mobile terminal 202 described above, the control unit 526 is implemented by processing circuitry including a processor and a memory, or by dedicated processing circuitry such as FPGA, ASIC, or DSP.

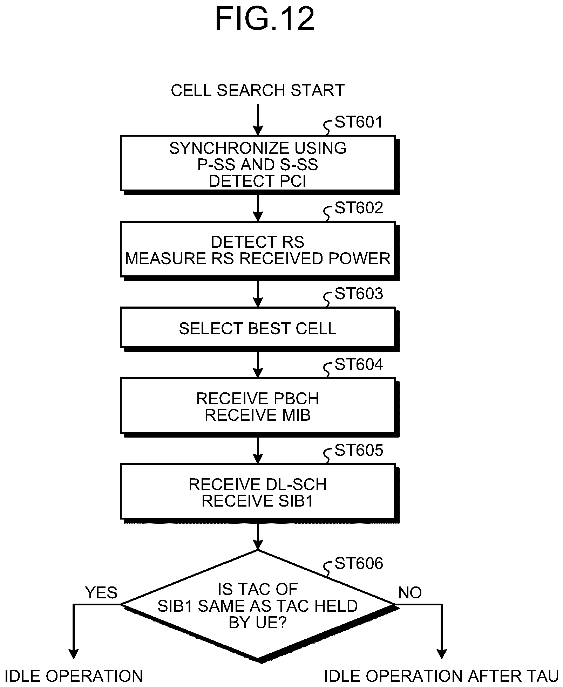

Next, an example of a cell search method in a communication system will be described. FIG. 12 is a flowchart schematically illustrating the procedure from a cell search to an idle operation performed by a communication terminal (UE) in an LTE-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to PCIs allocated to cells. The number of PCIs available is 504. The communication terminal performs synchronization using the 504 PCIs and detects (identifies) the PCI of a synchronized cell.

Next, in step ST602, the communication terminal detects, for the synchronized cell, a cell-specific reference signal (CRS), i.e. a reference signal (RS) transmitted from the base station for each cell, and measures the reference signal received power (RSRP) of the RS. For the reference signal (RS), codes corresponding one-to-one to PCIs are used. The cell can be separated from other cells based on the correlation with the code. By deriving the RS code of the cell from the PCI identified in step ST601, it is possible to detect the RS and measure the RS received power.

Next, in step ST603, the communication terminal selects, from among the one or more cells detected by step ST602, a cell having the best RS reception quality, e.g. a cell having the highest RS received power, or the best cell.

Next, in step ST604, the communication terminal receives the PBCH of the best cell and obtains the broadcast information BCCH. A Master Information Block (MIB) including cell configuration information is mapped to the BCCH on the PBCH. Therefore, the MIB is obtained by receiving the PBCH and obtaining the BCCH. Examples of MIB information include downlink (DL) system bandwidth (also called transmission bandwidth configuration or dl-bandwidth), the number of transmission antennas, and System Frame Number (SFN).

Next, in step ST605, the communication terminal receives the DL-SCH of the cell based on the cell configuration information of the MIB, and obtains System Information Block (SIB) 1 in the broadcast information BCCH. The SIB1 includes information related to access to the cell, information related to cell selection, and scheduling information of other SIBs (SIBk; k is an integer of ≥2) . The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC). The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

The example illustrated in FIG. 12 represents the LTE-based operation from the cell search to the idle operation, but in the case of NR, step ST603 may involve selecting the best beam in addition to the best cell. In addition, in the case of NR, step ST604 may involve acquiring beam information such as the beam identifier. In addition, in the case of NR, step ST604 may involve acquiring the scheduling information of Remaining Minimum SI (RMSI). In the case of NR, step ST605 may involve receiving the RMSI.

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

With the spread of smartphones and tablet terminal devices, the traffic of cellular wireless communications is explosively increasing, and there is a worldwide concern about the shortage of radio resources. In order to increase the frequency utilization efficiency accordingly, cell size reduction for spatial separation has been in progress.

In conventional cell configurations, a cell configured by an eNB has a relatively wide range of coverage. The conventional cell configurations are designed such that a certain area is covered by a relatively wide range of coverage of a plurality of cells configured by a plurality of eNBs.

In the case of cell size reduction, a cell configured by an eNB has a narrower coverage than a cell configured by a conventional eNB. Therefore, for covering the same area as in the conventional case, a larger number of eNBs with reduced cell size are required than conventional eNBs.

In the following description, a cell having a relatively large coverage such as a cell configured by a conventional eNB is referred to as a "macro cell", and an eNB constituting a macro cell is referred to as a "macro eNB". A cell having a relatively small coverage such as a cell with reduced size is referred to as a "small cell", and an eNB constituting a small cell is referred to as a "small eNB".

A macro eNB may be exemplified by a "wide area base station" described in Non Patent Literature 7.

A small eNB may be exemplified by a low power node, a local area node, a hotspot, or the like. Alternatively, a small eNB may be a pico eNB constituting a picocell, a femto eNB constituting a femtocell, a HeNB, a remote radio head (RRH), a remote radio unit (RRU), remote radio equipment (RRE), or a relay node (RN). Still alternatively, a small eNB may be a "local area base station" or a "home base station" described in Non Patent Literature 7.

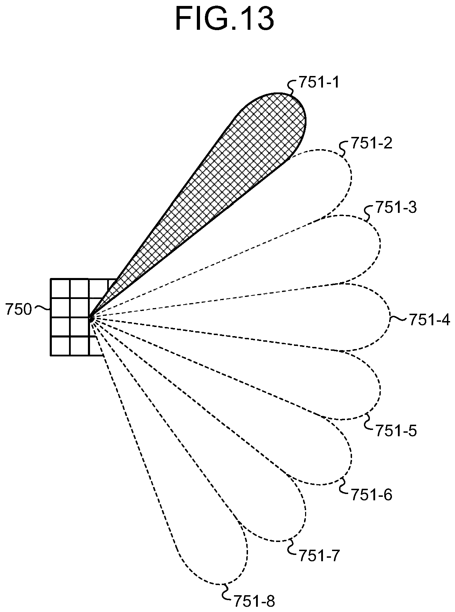

FIG. 13 illustrates an exemplary configuration of a cell in NR. In the NR cell, narrow beams are formed and transmitted in different directions. In the example illustrated in FIG. 13, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell.

FIG. 13 illustrates an example in which the number of beams the base station 750 uses is eight, but the number of beams may be different from eight. In addition, the number of beams the base station 750 simultaneously uses is one in the example illustrated in FIG. 13, but may be two or more.

3GPP supports sidelink (SL) for device-to-device (D2D) communication and vehicle-to-vehicle (V2V) communication (see Non Patent Literature 1 and Non Patent Literature 16). SL is defined by the PC5 interface.

Physical channels for use in SL (see Non Patent Literature 1) will be described. Physical Sidelink Broadcast Channel (PSBCH) carries information related to the system and synchronization and is transmitted from UE.

Physical Sidelink Discovery Channel (PSDCH) carries a sidelink discovery message from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Discovery Channel (SL-DCH) has periodic broadcast transmissions in a fixed size and a predetermined format. The SL-DCH supports both UE autonomous resource selection and resource allocation scheduled by the eNB. There is a collision risk in the UE autonomous resource selection, and there is no collision when the UE is allocated individual resources by the eNB. The SL-DCH supports HARQ combining but does not support HARQ feedback. The SL-DCH is mapped to the physical channel PSDCH.

Sidelink Shared Channel (SL-SCH) supports broadcast transmission. The SL-SCH supports both UE autonomous resource selection and resource allocation scheduled by the eNB. There is a collision risk in the UE autonomous resource selection, and there is no collision when the UE is allocated individual resources by the eNB. The SL-SCH supports HARQ combining but does not support HARQ feedback. The SL-SCH also supports dynamic link adaptation by changing transmission power, modulation, and coding. The SL-SCH is mapped to the physical channel PSSCH.

Logical channels for use in SL (see Non Patent Literature 1) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

3GPP has developed a framework for supporting V2X communication also in NR. V2X communication in NR is being developed based on LTE systems and LTE-A systems, but with the following modifications and additions.

In LTE, SL communication is applied only to broadcast. In NR, SL communication is designed to support unicast and groupcast in addition to broadcast (see Non Patent Literature 22 (3GPP TS23.287)).

Unicast communication and groupcast communication are designed to support HARQ feedback (Ack/Nack), CSI reporting, and the like.

SL communication is designed to support PC5-S signaling in order to support unicast and groupcast in addition to broadcast (see Non Patent Literature 22 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 22 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

UE positioning may be performed using transmission and reception of positioning signals between a base station and a UE. Downlink positioning signals may be, for example, positioning reference signals (PRS), SS blocks, DM-RS, or PTRS. Uplink positioning signals may be, for example, sounding reference signals (SRS), PRACH, DM-RS, or PTRS. For example, the base station may transmit a downlink positioning signal to the UE. The UE may transmit an uplink positioning signal to the base station. The transmission of a downlink positioning signal from the base station and the transmission of an uplink positioning signal from the UE may be performed independently. As another example, the UE may transmit an uplink positioning signal in response to receiving a downlink positioning signal from the base station. As still another example, the base station may transmit a downlink positioning signal in response to receiving an uplink positioning signal from the UE.

The UE may notify the LMF of the downlink positioning signal reception result. The reception result of the downlink positioning signal may include, for example, information related to the propagation delay of the downlink positioning signal or information related to the arrival direction of the downlink positioning signal. As another example, the UE may transmit, to the LMF, information related to the time difference between the reception of the downlink positioning signal and the transmission of the uplink positioning signal, information related to the uplink positioning signal transmission time, or information related to the downlink positioning signal reception time.

The base station may notify the LMF of the uplink positioning signal reception result. The reception result of the uplink positioning signal may include, for example, information related to the propagation delay of the uplink positioning signal or information related to the arrival direction of the uplink positioning signal. As another example, the base station may transmit, to the LMF, information related to the downlink positioning signal transmission time, information related to the uplink positioning signal reception time, or information related to the time difference between the reception of the uplink positioning signal and the transmission of the downlink positioning signal.

The LMF may derive the position of the UE using the foregoing information from the UE and/or the base station.

UE positioning may be performed using SL. For example, SL may be used to measure the relative position between UEs in a place where radio waves from a global navigation satellite system (GNSS) or a base station cannot reach (e.g. inside a tunnel).

However, no method has been disclosed for positioning with SL. Therefore, positioning with SL is inexecutable, resulting in the problem that UE is incapable of positioning in an environment in which only SL communication is available, for example.

The first embodiment discloses a solution to this problem.

In the communication system according to the first embodiment, for example, a UE performs positioning using SL. That is, a UE performs position calculation. Note that the position calculation may be performed not by a UE but by a base station or LMF. In cases where a UE is configured to perform position calculation, the UE may have all or part of the function (hereinafter may be referred to as the LMF function) included in the LMF. For example, the UE may perform the position calculation of the UE itself, or may perform the position calculation of another UE. The foregoing operation may be performed, for example, when the UE is out of coverage of base stations, or may be performed within coverage.

The LMF may give the UE a surrogate allocation of all or part of the LMF function (hereinafter may be referred to as a location server surrogate (LSS) allocation). The LSS allocation from the LMF to the UE may be performed when the UE is within coverage of a base station. For the LSS allocation from the LMF to the UE, for example, LPP signaling may be used. The LSS allocation from the LMF to the UE may be, for example, the allocation of the LMF function related to positioning with SL.

As another example of the LSS allocation from the LMF to the UE, the LSS allocation may be made via a base station. For example, the LMF may make an LSS allocation to the base station. The base station to which the LSS allocation has been made may make an LSS allocation to the UE. The LSS allocation from the LMF to the base station may be performed using, for example, a method disclosed in Non Patent Literature 30 (3GPP R2-2007629). The LSS allocation from the base station to the UE may be performed using NRPPa signaling or LPP signaling. The LSS allocation from the base station to the UE may be performed using RRC signaling. The LSS allocation from the base station to the UE may be, for example, the allocation of the LMF function related to positioning with SL.

In the LSS allocation from the LMF to the UE, the function to be allocated may be specified. For example, the UE may or may not be able to determine the positioning method. As another example, another UE and/or a base station for use in positioning may or may not be determined. As a result, for example, positioning can be flexibly executed in the communication system.

As another example, a UE may have part or all of the function of LMF in advance. The UE may be, for example, a road side unit (RSU).

A UE may designate the position of the UE itself as a positioning target. The UE (hereinafter may be referred to as a positioning target UE) may request a location service from another UE. The UE from which a UE requests a location service may be, for example, a UE to which an LSS allocation has been made and/or a UE having part or all of the function of LMF (these UEs may be hereinafter collectively referred to as LSS-UEs).

The positioning target UE may request a location service using location service request signaling (see Non Patent Literature 24 (3GPP TS38.305)) or other similar signaling schemes. The request may be transmitted and received between UEs. The request may include information related to the positioning method. The method may relate to positioning with SL, for example. The LSS-UE may start positioning with SL in response to the request. As a result, for example, the LSS-UE can quickly start the positioning procedure. As another example, the LSS-UE may start positioning with SL in response to being notified of the request through SL. As a result, for example, the signaling size of the request can be reduced.

The request may be made by LPP signaling or NRPPa signaling. As a result, for example, design complexity in the communication system can be avoided.

A positioning protocol (hereinafter may be referred to as PC5 Positioning Protocol or PCPP) that terminates between UEs may be provided. The request may be transmitted using PCPP signaling. As a result, for example, flexibility in the communication system can be improved.

The LSS-UE may broadcast a message that the LSS-UE has part or all of the function of LMF. For the broadcast, for example, an announcement message disclosed in Non Patent Literature 23 (3GPP TS23.303) may be used, or a new type of signaling may be provided. A UE may recognize the presence of the LSS-UE using the message and/or the signaling. The UE may request a location service from the LSS-UE in response to receiving the message. The request may be made using LPP signaling, NRPPa signaling, or PCPP signaling. The LSS-UE may start the procedure for positioning the positioning target UE in response to the request.

The broadcast may include information for identifying the LSS-UE or information related to a positioning method supportable by the LSS-UE. As a result, for example, the positioning target UE can quickly acquire information related to the LSS-UE supporting the positioning method executable in the positioning target UE.

The LSS-UE may request information related to positioning-related capabilities from the positioning target UE. The request may be made using LPP signaling, NRPPa signaling, or PCPP signaling. The positioning target UE may notify the LSS-UE of the positioning-related capabilities of the positioning target UE in response to the request. The capability notification may be given using LPP signaling, NRPPa signaling, or PCPP signaling. The LSS-UE may determine positioning-related settings using the notification. As a result, for example, the LSS-UE can select a positioning method suitable for the positioning target UE.

Positioning-related capabilities may include information related to the positioning method (e.g. measurement using propagation delay, RTT, or OTDOA) executable in the positioning target UE, or information related to the number of beams and/or the thickness of beams usable in the positioning target UE.

The positioning-related settings may be, for example, settings related to the positioning method (e.g. measurement using propagation delay, RTT, observed time difference of arrival (OTDOA), or measurement using angle of radio wave arrival), or settings related to the positioning signal to be used (e.g. SL-SS, DMRS, PRS, or SRS). Note that OTDOA is disclosed in Non Patent Literature 24 (3GPP TS38.305).

The LSS-UE may notify the positioning target UE of the positioning-related settings. The positioning target UE may configure positioning-related settings using the notification. The settings may be, for example, the type of positioning signal, information related to the positioning method, the frequency and/or time resources of positioning signals, or a combination thereof. The settings may be, for example, information related to the positioning signal to be transmitted from the LSS-UE to the positioning target UE, or information related to the positioning signal to be transmitted from the positioning target UE to the LSS-UE. As a result, for example, transmission and reception of positioning signals between the positioning target UE and the LSS-UE can be executed using appropriate resources, and consequently adverse effects such as interference with the communication system can be prevented.

The positioning target UE may determine positioning-related settings. The settings may be, for example, settings related to the time and/ frequency resources of positioning signals. The settings may be, for example, information related to the positioning signal to be transmitted from the positioning target UE to the LSS-UE. The positioning target UE may determine the settings using, for example, the information related to the positioning method provided by the LSS-UE. The positioning target UE may notify the LSS-UE of the settings. The LSS-UE may configure settings related to positioning signals using the notification. As a result, for example, transmission and reception of positioning signals between the positioning target UE and the LSS-UE can be executed using appropriate resources, and consequently adverse effects such as interference with the communication system can be prevented.

The LSS-UE may transmit a positioning signal to the positioning target UE. The positioning signal may be SL-SS, or a reference signal may be used. As the reference signal, for example, DM-RS may be used, PRS for SL may be provided, or SRS for SL may be provided. The positioning signal may be PRS for SL or SRS for SL. The LSS-UE may derive the reception result of the positioning signal using the positioning signal transmitted from the positioning target UE. The positioning target UE may derive the reception result of the positioning signal using the positioning signal transmitted from the LSS-UE. The reception result may include information related to the propagation delay, information related to the time difference between the reception and the transmission, or information related to the arrival direction of the positioning signal.

The positioning target UE may notify the LSS-UE of information related to the positioning signal reception result. The notification may include the reception result of the positioning signal described above. For the notification, RRC signaling, LPP signaling, NRPPa signaling, or PCPP signaling may be used. The LSS-UE may calculate the position of the positioning target UE using the information. For the calculation of the position of the positioning target UE, information related to the reception result derived by the LSS-UE may be used, or information related to the reception result of positioning signals from another UE and/or a base station may be used.

The LSS-UE may notify the positioning target UE of information related to the position of the positioning target UE. For the notification, RRC signaling, LPP signaling, NRPPa signaling, or PCPP signaling may be used.

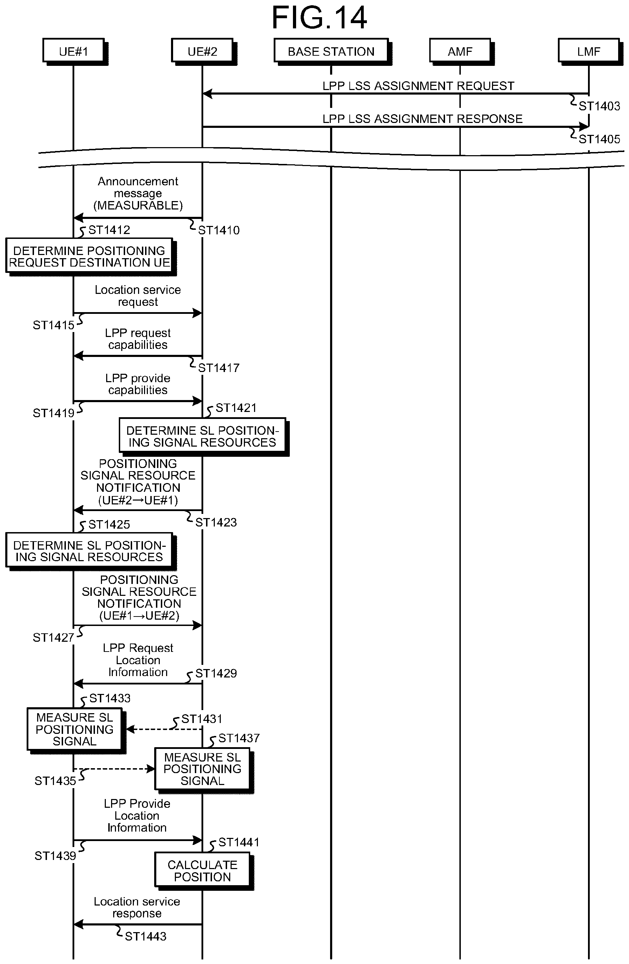

FIG. 14 is a sequence diagram illustrating an operation for positioning with SL. FIG. 14 illustrates a case where UE#1 is a positioning target UE and UE#2 is an LSS-UE. The example illustrated in FIG. 14 is based on the assumption that UE#2 exists within the coverage of the base station at the timings of steps ST1403 and ST1405. In the example illustrated in FIG. 14, UE#2 may be outside or within the coverage of the base station at the timings after step ST1410. In the example illustrated in FIG. 14, UE#1 may be within or outside the coverage of the base station.

In step ST1403 illustrated in FIG. 14, the LMF makes an LSS allocation to UE#2. The allocation may be made by LPP signaling, for example. The signal may include information indicating that positioning with SL is to be performed. UE#2 may activate the positioning function of UE#2 in response to the signaling in step ST1403. In step ST1405, UE#2 may transmit a response to the LSS allocation to the LMF. The response may be made using, for example, LPP signaling. The response may be a positive response or a negative response to the LSS allocation. The response may include a reason for denying the LSS allocation. An example of the reason may be non-implementation of the positioning function or non-implementation of the SL function. The example illustrated in FIG. 14 is based on the assumption that UE#2 returns a positive response to the LMF.

In step ST1410 illustrated in FIG. 14, UE#2 broadcasts a message that UE#2 has part or all of the function of LMF. For the broadcast, for example, an announcement message disclosed in Non Patent Literature 23 (3GPP TS23.303) may be used. The message may include information indicating that positioning with SL is available. UE#1 may recognize that UE#2 is the LSS-UE using step ST1410. In step ST1412, UE#1 determines a positioning request destination UE. In the example illustrated in FIG. 14, UE#1 designates UE#2 as the positioning request destination UE.

In step ST1415 illustrated in FIG. 14, UE#1 requests UE#2 to position UE#1 by transmitting a location service request (see Non Patent Literature 24 (3GPP TS38.305)). The request may be made using LPP signaling, NRPPa signaling, or PCPP signaling. UE#2 starts the procedure for positioning the positioning target UE in response to the request.

In step ST1417 illustrated in FIG. 14, UE#2 requests the positioning-related capabilities of UE#1 from UE#1. The request may be made using, for example, LPP signaling, NRPPa signaling, or PCPP signaling. In step ST1419, UE#1 notifies UE#2 of the positioning-related capabilities of UE#1. The notification may be given using, for example, LPP signaling, NRPPa signaling, or PCPP signaling. In step ST1421, UE#2 determines the positioning-related settings of UE#1, specifically, resources for positioning. UE#2 may make the determination using the information included in step ST1419. The resources determined by UE#2 may be, for example, the positioning method or the frequency and/or time resources of positioning signals. The resources determined by UE#2 may be, for example, related to the positioning signal to be transmitted from UE#2 to UE#1. In step ST1423, UE#2 notifies UE#1 of information on the resources determined in step ST1421.

In step ST1425 illustrated in FIG. 14, UE#1 determines the positioning-related settings of UE#2, specifically, resources for positioning. UE#1 may determine the resources using the information included in step ST1423. For example, UE#1 may determine the resources using the information of the positioning method included in step ST1423. The resources determined by UE#1 may be, for example, the frequency and/or time resources of positioning signals. The resources determined by UE#1 may be, for example, related to the positioning signal to be transmitted from UE#1 to UE#2. In step ST1427, UE#1 notifies UE#2 of information on the resources determined in step ST1425.

In step ST1429 illustrated in FIG. 14, UE#2 requests UE#1 to transmit and receive positioning signals. The request may be made using LPP signaling, NRPPa signaling, or PCPP signaling. In response to the request, UE#1 transmits a positioning signal to UE#2 and starts the operation of receiving a positioning signal from UE#2. After transmitting the request, UE#2 transmits a positioning signal to UE#1 and starts the operation of receiving a positioning signal from UE#1.

In step ST1431 illustrated in FIG. 14, UE#2 transmits a positioning signal to UE#1. The positioning signal may be transmitted by broadcast, transmitted individually, or simultaneously transmitted to the UEs in a group. In step ST1433, UE#1 receives the positioning signal from UE#2. In step ST1435, UE#1 transmits a positioning signal to UE#2. The positioning signal may be transmitted by broadcast, transmitted individually, or simultaneously transmitted to the UEs in a group. In step ST1437, UE#2 receives the positioning signal from UE#1.

FIG. 14 illustrates a case where steps ST1431 and ST1433 are performed before steps ST1435 and ST1437, but steps ST1431 and ST1433 may be performed after steps ST1435 and ST1437.

In FIG. 14, the operation of steps ST1431 and ST1433 may be performed multiple times. For example, the operation may be performed at a time different from the last operation. The same may apply to steps ST1435 and ST1437. As a result, for example, the positioning accuracy can be improved.

In step ST1439 illustrated in FIG. 14, UE#1 notifies UE#2 of the positioning signal reception result. The notification may be given using LPP signaling, NRPPa signaling, or PCPP signaling. In step ST1441, UE#2 derives the position of UE#1. UE#2 may derive the relative position of UE#1 or may derive the distance from UE#1. For the derivation, UE#2 may use the information included in step ST1439 and/or the positioning signal reception result acquired at UE#2.

In step ST1443 illustrated in FIG. 14, UE#2 notifies UE#1 of information related to the positioning result. The information may include information related to the position of UE#1 (e.g. position, position relative to UE#2, or distance from UE#2), or information related to the time corresponding to the position. The notification may be given using LPP signaling, NRPPa signaling, or PCPP signaling.

FIG. 14 illustrates an example in which the LMF makes an LSS allocation to UE#2 in steps ST1403 and ST1405, but the LMF may make an LSS allocation to the base station. The base station may make an LSS allocation to UE#2. That is, the LMF may make an LSS allocation to the base station, and the base station to which the LSS allocation has been made may make an LSS allocation to UE#2. As a result, for example, the base station can select the LSS-UE using information related to the radio wave environment with respect to each UE, and consequently the reliability of positioning can be improved.

The example illustrated in FIG. 14 represents a case in which the positioning signal transmission/reception request denoted by step ST1429 is made after the positioning resource notification denoted by steps ST1423 and ST1427. However, UE#1 and UE#2 may give the positioning resource notification after the positioning signal transmission/reception request. The positioning resource notification from UE#1 and UE#2 may be given using, for example, sidelink (SL) control information (SCI). As a result, for example, UE#1 and UE#2 can transmit and receive positioning signals immediately after receiving the positioning resource notification, and consequently transmission and reception of unnecessary positioning signals can be prevented.

The example illustrated in FIG. 14 represents a case in which the determination of positioning settings denoted by steps ST1421 and ST1425 is made before the positioning signal transmission/reception request denoted by step ST1429. However, the determination may be made after the positioning signal transmission/reception request denoted by step ST1429. As a result, for example, UE#1 and UE#2 can determine positioning settings immediately before the transmission and reception of positioning signals, and consequently positioning settings can be configured based on the propagation environment between UE#1 and UE#2.

As another example in which the positioning target UE determines a location service request destination, the positioning target UE may inquire of nearby UEs as to whether location service is supported. The inquiry may be made as a broadcast to nearby UEs, as an individual notification to nearby UEs, or as a simultaneous notification to a predetermined group. For the inquiry, for example, a solicitation message disclosed in Non Patent Literature 23 (3GPP TS23.303) may be used, or a new type of signaling may be provided. The inquiry may be made using LPP signaling, NRPPa signaling, or PCPP signaling.

The LSS-UE may notify the positioning target UE of information indicating that the LSS-UE supports location service. The notification may be given, for example, as a response to the inquiry from the positioning target UE. For the notification, for example, a response message disclosed in Non Patent Literature 23 (3GPP TS23.303) may be used, or a new type of signaling may be provided. The notification may be given using LPP signaling, NRPPa signaling, or PCPP signaling. The positioning target UE may determine a UE that is a location service request destination using the notification.

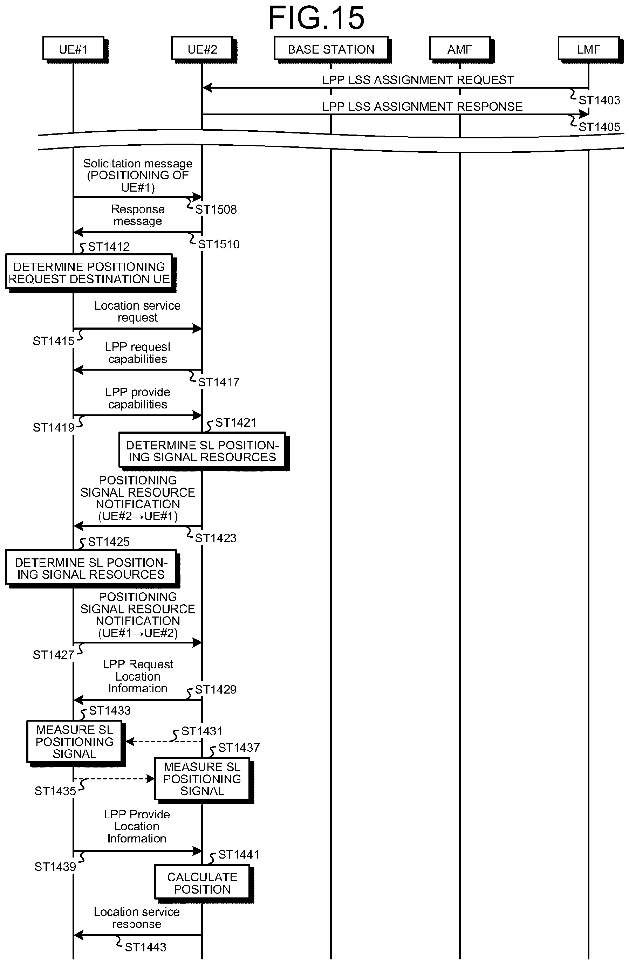

FIG. 15 is a sequence diagram illustrating another example of an operation for positioning with SL. FIG. 15 illustrates a case where UE#1 is a positioning target UE and UE#2 is an LSS-UE. The example illustrated in FIG. 15 is based on the assumption that UE#2 exists within the coverage of the base station at the timings of steps ST1403 and ST1405. In the example illustrated in FIG. 15, UE#2 may be outside or within the coverage of the base station at the timings after step ST1508. In the example illustrated in FIG. 15, UE#1 may be within or outside the coverage of the base station. In FIG. 15, processes identical to those in FIG. 14 are denoted by the same step numbers, and descriptions already provided are omitted.

Steps ST1403 and ST1405 in FIG. 15 are similar to those in FIG. 14.

In step ST1508 in FIG. 15, UE#1 makes an inquiry to a UE having the LMF function. The inquiry may be made by broadcast, individual notification to UEs, or simultaneous notification to the UEs in a predetermined group. For the inquiry, for example, a solicitation message disclosed in Non Patent Literature 23 (3GPP TS23.303) may be used. The message may include information indicating that the positioning of UE#1 is requested. UE#2 may recognize that UE#1 is requesting positioning in response to step ST1508. In step ST1510, UE#2 may notify UE#1 of information indicating that UE#2 has the positioning function. The notification may be given, for example, using a response message disclosed in Non Patent Literature 23 (3GPP TS23.303).

Steps ST1412 to ST1443 in FIG. 15 are similar to those in FIG. 14.

In FIG. 15, the solicitation message in step ST1508 and the location service request in step ST1415 may be integrated into one signaling. As a result, for example, the amount of signaling between UEs can be reduced.

In FIG. 15, the response message in step ST1510 and the capability request in step ST1417 may be integrated into one signaling. As a result, for example, the amount of signaling between UEs can be reduced.

FIG. 15 illustrates an example in which the LMF makes an LSS allocation to UE#2 in steps ST1403 and ST1405, but the LMF may make an LSS allocation to the base station. The base station may make an LSS allocation to UE#2. As a result, for example, the base station can select the LSS-UE using information related to the radio wave environment with respect to each UE, and consequently the reliability of positioning can be improved.

The example illustrated in FIG. 15 represents a case in which the positioning signal transmission/reception request denoted by step ST1429 is made after the positioning resource notification denoted by steps ST1423 and ST1427. However, UE#1 and UE#2 may give the positioning resource notification after the positioning signal transmission/reception request. The positioning resource notification from UE#1 and UE#2 may be given using, for example, SL control information (SCI). As a result, for example, UE#1 and UE#2 can transmit and receive positioning signals immediately after receiving the positioning resource notification, and consequently transmission and reception of unnecessary positioning signals can be prevented.

The example illustrated in FIG. 15 represents a case in which the determination of positioning settings denoted by steps ST1421 and ST1425 is made before the positioning signal transmission/reception request denoted by step ST1429. However, the determination may be made after the positioning signal transmission/reception request denoted by step ST1429. As a result, for example, UE#1 and UE#2 can determine positioning settings immediately before the transmission and reception of positioning signals, and consequently positioning settings can be configured based on the propagation environment between UE#1 and UE#2.

Disclosed below are other solutions. A UE may designate the position of another UE as a positioning target. The former UE may be an LSS-UE. That is, the LSS-UE may determine the UE that is a positioning target.

The LSS-UE may determine the positioning target UE using discovery signals for searching for a UE capable of SL communication transmitted and received from nearby UEs, or may determine the positioning target UE using broadcast information transmitted from nearby UEs.

As examples of information broadcast by nearby UEs, (1) to (6) below are disclosed.
(1) Type of UE.
(2) Information related to the position of UE.
(3) Information related to the speed of UE.
(4) Information related to the positioning function UE has.
(5) Information related to the group of UE.
(6) Combinations of (1) to (5).

The information related to (1) may be, for example, in-vehicle UE, UE accompanying a pedestrian, UE mounted on another type of vehicle, UE mounted on an unmanned aerial vehicle (UAV, so-called drone), or RSU. The LSS-UE may determine the positioning target UE using the information. For example, an in-vehicle UE may be designated as a positioning target UE. As a result, for example, an appropriate positioning target UE can be selected based on the purpose of positioning.

The information related to (2) may be, for example, the position of the UE measured by GNSS or the like. Another example may be information related to the lane in which the UE is running. The information related to the lane may be information related to the traveling direction (e.g. for Tokyo, or clockwise or counterclockwise in a loop line), information related to the lane in which the UE is running (e.g. leftmost lane, or second lane from right), or information related to the traveling position of the UE in the lane (e.g. lane center, distance in centimeters to left from the lane center, or distance in centimeters from the left edge of the lane). The LSS-UE may designate, for example, a vehicle following the LSS-UE as a positioning target UE using the information. As a result, for example, the position of the positioning target UE can be derived using the distance between the LSS-UE and the positioning target UE, and consequently positioning can be quickly executed.

As another example of the information related to (2), information related to a predetermined zone (see Non Patent Literature 33 (3GPP TR37.985)) described later in the fourth embodiment may be included. As a result, for example, the UE can quickly determine the resources to be used in positioning with SL.

The information related to (3) may be, for example, a value acquired using a speedometer or the speed of the UE measured by GNSS or the like. The LSS-UE may determine the positioning target UE using the information. For example, if a UE accompanying a pedestrian is to be positioned, a UE at a speed of a predetermined value or more may be excluded from designation as a positioning target UE. As a result, for example, the LSS-UE can appropriately select a positioning target UE.

The information related to (4) may be, for example, a positioning method (e.g. GNSS or OTDOA) supportable by the UE. The LSS-UE may determine the positioning method for the positioning target UE using the information. As a result, for example, the LSS-UE can select an appropriate positioning method.

The information related to (5) may be, for example, information (e.g. identifier) related to the group to which the UE belongs in SL communication. The group may be, for example, a platoon in platoon running. The LSS-UE may determine the positioning target UE using the information. As a result, for example, the LSS-UE can be prevented from erroneously determining the positioning target UE.

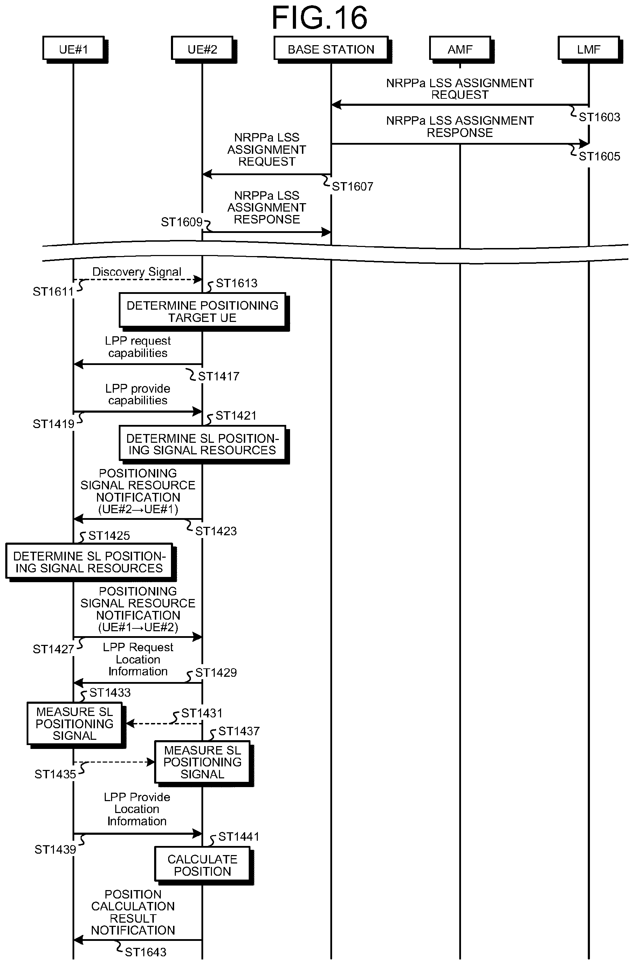

FIG. 16 is a sequence diagram illustrating another example of an operation for positioning with SL. FIG. 16 illustrates a case where UE#1 is a positioning target UE and UE#2 is an LSS-UE. The example illustrated in FIG. 16 represents an operation in which UE#2 designates UE#1 as a positioning target UE. The example illustrated in FIG. 16 shows that the LMF makes an LSS allocation to the base station and the base station makes an LSS allocation to UE#2. The example illustrated in FIG. 16 is based on the assumption that UE#2 exists within the coverage of the base station at the timings of steps ST1603 to ST1609. In the example illustrated in FIG. 16, UE#2 may be outside or within the coverage of the base station at the timings after step ST1611. In the example illustrated in FIG. 16, UE#1 may be within or outside the coverage of the base station. In FIG. 16, processes identical to those in FIG. 14 are denoted by the same step numbers, and descriptions already provided are omitted.

In step ST1603 illustrated in FIG. 16, the LMF makes an LSS allocation to the base station. The LSS allocation in step ST1603 may be made using, for example, NRPPa signaling. The signaling in step ST1603 may include information indicating that the LSS allocation to UE is permitted, or information related to the UE to which an LSS allocation is made. In step ST1605, the base station notifies the LMF of a response to step ST1603.

In step ST1607 illustrated in FIG. 16, the base station makes an LSS allocation to UE#2. The base station may determine the UE to which an LSS allocation is made using the information included in the LSS allocation from the LMF, or based on its own decision. For example, the base station may designate a UE having a large number of SL connections with other UEs as the UE to which an LSS allocation is made. As a result, for example, the UE to which an LSS allocation is made can be flexibly determined according to the communication environment. In step ST1609, UE#2 notifies the base station of a response to the LSS allocation.

In step ST1611 illustrated in FIG. 16, UE#1 transmits a discovery signal to UE#2. The transmission may be broadcast to nearby UEs, provided as an individual notification to UEs, or provided as a simultaneous notification to the UEs in a predetermined group. UE#1 may broadcast broadcast information. The broadcast information may include the above-described information items (1) to (6). In step ST1613, UE#2 designates UE#1 as a positioning target UE. UE#2 may determine the positioning target UE using the above-described information items (1) to (6) included in the broadcast signal received in step ST1611.

Steps ST1417 to ST1441 illustrated in FIG. 16 are similar to those in FIG. 14.

In step ST1643 illustrated in FIG. 16, UE#2 notifies UE#1 of information related to the position of UE#1. The notification may include information related to the relative position of UE#1 with respect to UE#2, information related to the distance between UE#1 and UE#2, or information related to the absolute position of UE#1 (e.g. latitude, longitude, or altitude of UE#1, etc.).

FIG. 16 illustrates an example in which the LMF makes an LSS allocation to the base station, but the LMF may directly make an LSS allocation to a UE.

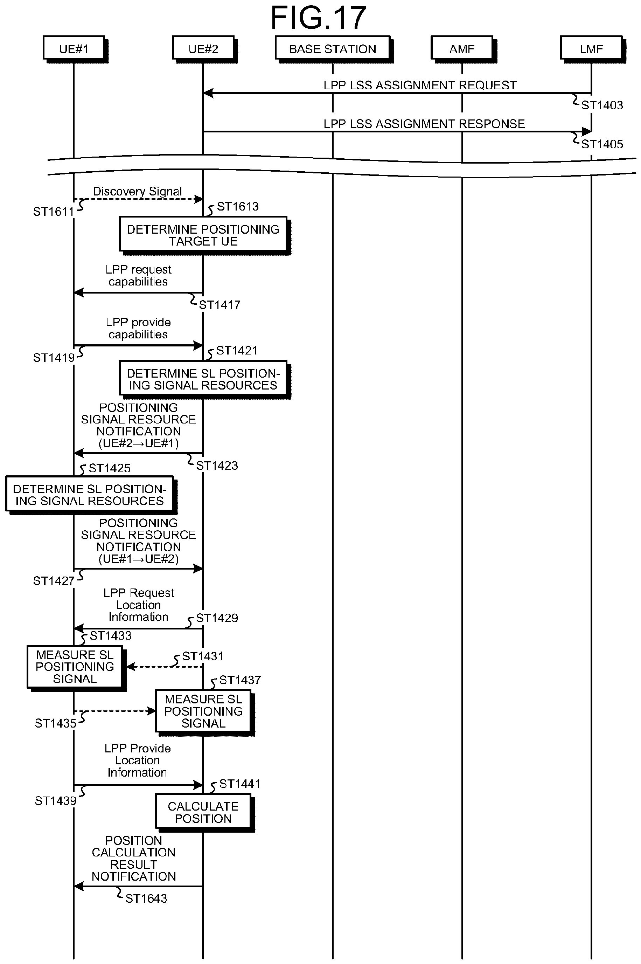

FIG. 17 is a sequence diagram illustrating another example of an operation for positioning with SL. FIG. 17 illustrates a case where UE#1 is a positioning target UE and UE#2 is an LSS-UE. The example illustrated in FIG. 17 shows that the LMF makes an LSS allocation to UE#2. The example illustrated in FIG. 17 represents an operation in which UE#2 designates UE#1 as a positioning target UE. The example illustrated in FIG. 17 is based on the assumption that UE#2 exists within the coverage of the base station at the timings of steps ST1403 and ST1405. In the example illustrated in FIG. 17, UE#2 may be outside or within the coverage of the base station at the timings after step ST1611. In the example illustrated in FIG. 17, UE#1 may be within or outside the coverage of the base station. In FIG. 17, processes identical to those in FIG. 14 or 16 are denoted by the same step numbers, and descriptions already provided are omitted.

Steps ST1403 and ST1405 in FIG. 17 are similar to those in FIG. 14.

Steps ST1611 and ST1613 in FIG. 17 are similar to those in FIG. 16.

Step ST1643 in FIG. 17 is similar to that in FIG. 16.

The UE may request a location service from the LMF. The request may be made, for example, via the AMF. For the request, for example, signaling of location service request (see Non Patent Literature 24 (3GPP TS38.305)) may be used. The request may include, for example, information related to the positioning-related capabilities of the requester UE. As a result, for example, the LMF can select a positioning method appropriate for the positioning target UE and/or the positioning requester UE.

The request may include, for example, information related to the positioning target UE. As a result, for example, the LMF can quickly grasp which UE is the positioning target UE.

The information related to the positioning target UE included in the request may be information for use in identification of the UE (e.g. UE-ID, Cell Radio Network Temporary Identifier (C-RNTI), Inactive Radio Network Temporary Identifier (I-RNTI), 5G S-Temporary Mobile Subscription Identifier (5G-S-TMSI), Subscription Permanent Identifier (SUPI), Subscription Concealed Identifier (SUCI), Permanent Equipment Identifier (PEI), or 5G Globally Unique Temporary Identifier (5G-GUTI) (see Non Patent Literature 21 (3GPP TS23.501))), the range status of the UE with respect to the base station, or the state of the UE (e.g. RRC state, CM state, and/or RM state). The LMF may determine the positioning method (e.g. use of SL or use of Uu) using the information.

The LMF may acquire information related to the positioning target UE. For example, the LMF may request the information from the AMF. The request may be made, for example, via the AMF. For the request, for example, NRPPa signaling or LPP signaling may be used. The AMF may notify the LMF of the information. For the notification, for example, NRPPa signaling or LPP signaling may be used.

The LMF may notify the UE of a response to the location service request. The notification may be given via the AMF. For the notification, for example, signaling of location service response (see Non Patent Literature 24 (3GPP TS38.305)) may be used. The request may include, for example, information related to the positioning method. The information related to the positioning method may be information related to positioning with SL, for example. The UE may recognize using the information that positioning with SL is to be performed. As a result, for example, positioning processing by the requester UE can be quickly executed.

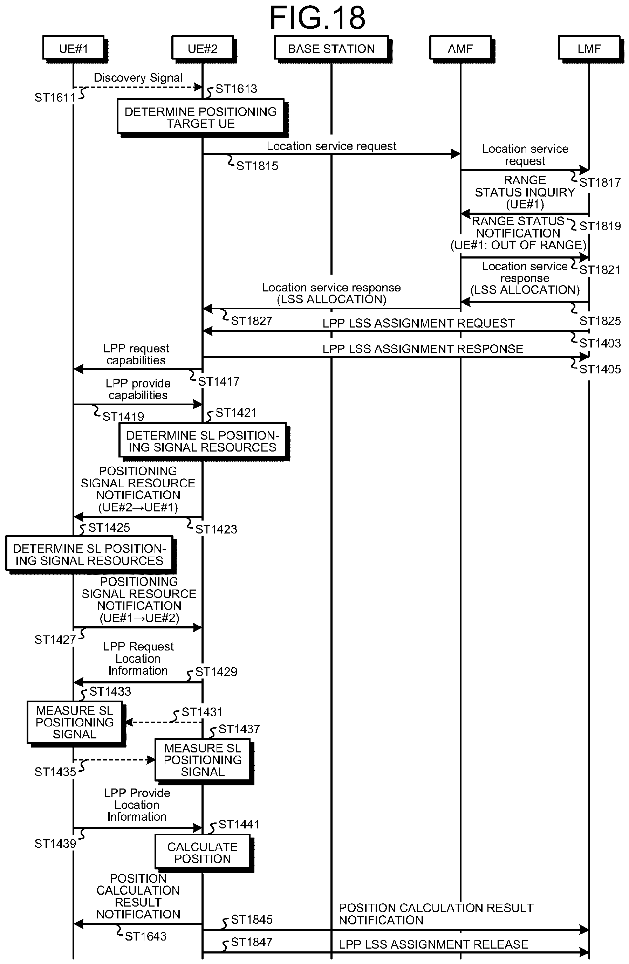

FIG. 18 is a sequence diagram illustrating another example of an operation for positioning with SL. FIG. 18 illustrates a case where UE#1 is a positioning target UE and UE#2 is an LSS-UE. The example illustrated in FIG. 18 shows that UE#2 requests a location service from the LMF, and the LMF makes an LSS allocation to UE#2. The example illustrated in FIG. 18 represents an operation in which UE#2 designates UE#1 as a positioning target UE. The example illustrated in FIG. 18 is based on the assumption that UE#1 is outside the coverage of the base station. In FIG. 18, processes identical to those in FIG. 14 or 16 are denoted by the same step numbers, and descriptions already provided are omitted.

Steps ST1611 and ST1613 in FIG. 18 are similar to those in FIG. 16.

In step ST1815 in FIG. 18, UE#2 makes a location service request to the AMF. For the request, for example, signaling of location service request (see Non Patent Literature 24 (3GPP TS38.305)) may be used. In the request, UE#2 may include information indicating that the positioning target UE is UE#1.

In step ST1817 in FIG. 18, the AMF makes a location service request to the LMF. For the request, for example, signaling of location service request (see Non Patent Literature 24 (3GPP TS38.305)) may be used.

In step ST1819 in FIG. 18, the LMF inquires of the AMF about the range status of UE#1. The LMF may inquire of the AMF about the state of UE#1 (e.g. RRC state, CM state, or RM state). For the inquiry, LPP signaling or NRPPa signaling may be used. In step ST1821, the AMF notifies the LMF of the range status of UE#1. In the example illustrated in FIG. 18, the AMF notifies the LMF that UE#1 is out of range. The AMF may notify the LMF of the state of UE#1 (e.g. RRC state, CM state, or RM state).

In step ST1825 in FIG. 18, the LMF notifies the AMF of a response to the location service request. For the notification, for example, signaling of location service response (see Non Patent Literature 24 (3GPP TS38.305)) may be used. The notification may include, for example, information indicating that the LMF does not perform position calculation, information indicating that the LSS allocation to UE#2 is to be made, or information indicating that positioning with SL is to be performed. In step ST1827, the AMF notifies UE#2 of a response to the location service request. For the notification from the AMF to UE#2, for example, signaling of location service response (see Non Patent Literature 24 (3GPP TS38.305)) may be used. For example, the AMF may give the notification in step ST1827 using the information included in step ST1825.

Steps ST1403 to ST1441 in FIG. 18 are similar to those in FIG. 14.

Step ST1643 in FIG. 18 is similar to that in FIG. 16.

In step ST1845 in FIG. 18, UE#2 notifies the LMF of the position calculation result of UE#1. The information included in step ST1845 may be similar to the information included in step ST1643. For the notification in step ST1845, LPP signaling, NRPPa signaling, or PCPP signaling may be used.

In step ST1847 in FIG. 18, UE#2 notifies the LMF of the release of the LSS function. For the notification of release, for example, LPP signaling may be used. The notification of release may be given using, for example, a method disclosed in Non Patent Literature 30 (3GPP R2-2007629) .

FIG. 18 illustrates an example in which the LMF directly makes an LSS allocation to a UE. However, the LMF may make an LSS allocation to a base station, and the base station may make an LSS allocation to a UE. As a result, for example, LSS allocation can be flexibly executed according to the propagation environment in the communication system.

A UE may request an LSS allocation from the LMF. The request may be made using, for example, LPP signaling. The LPP signaling may be, for example, signaling indicating that there is an LSS allocation request from the UE (e.g. LPP LSS Assignment Required), or other types of signaling may be provided. As a result, for example, the LMF can recognize that the UE is demanding to perform the positioning of another UE, and thus the range status inquiry from the LMF to the AMF becomes unnecessary. Consequently, the amount of signaling in the communication system can be reduced.

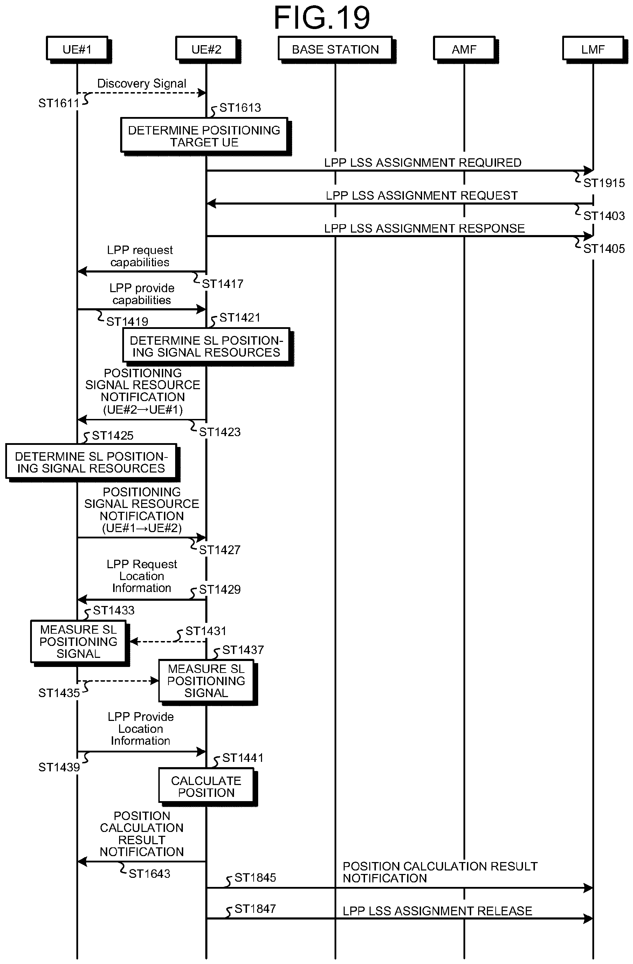

FIG. 19 is a sequence diagram illustrating another example of an operation for positioning with SL. FIG. 19 illustrates a case where UE#1 is a positioning target UE and UE#2 is an LSS-UE. The example illustrated in FIG. 19 shows that UE#2 requests an LSS allocation from the LMF, and LMF makes an LSS allocation to UE#2. The example illustrated in FIG. 19 represents an operation in which UE#2 designates UE#1 as a positioning target UE. The example illustrated in FIG. 19 is based on the assumption that UE#1 is outside the coverage of the base station. In FIG. 19, processes identical to those in FIG. 14, 16, or 18 are denoted by the same step numbers, and descriptions already provided are omitted.

Steps ST1611 and ST1613 in FIG. 19 are similar to those in FIG. 16.

In step ST1915 in FIG. 19, UE#2 requests an LSS allocation from the LMF. The request may be made using, for example, LPP signaling. The LPP signaling may be, for example, signaling indicating that there is an LSS allocation request from the UE (e.g. LPP LSS Assignment Required), or other types of signaling may be provided. The LMF may determine the LSS allocation to UE#2 in response to step ST1915.

Steps ST1403 to ST1441 in FIG. 19 are similar to those in FIG. 14.

Step ST1643 in FIG. 19 is similar to that in FIG. 16.

Steps ST1845 and ST1847 in FIG. 19 are similar to those in FIG. 18.

Disclosed below are other solutions. A base station may perform the position calculation of a UE. The base station may perform the position calculation of the UE using the reception result of positioning signals in SL. The position calculation at the base station may be performed, for example, when one or more UEs involved in positioning are within the coverage of the base station.

The LMF may make an LSS allocation to the base station. For example, in a case where the UE demanding positioning cannot be given an LSS allocation, the LMF may make an LSS allocation to the base station. As a result, for example, positioning with SL is available even when the UE cannot execute position calculation.

The LMF may make an LSS allocation to the base station in response to a location service request from the UE. The LMF may transfer the location service request from the UE to the base station. The transfer may be made using, for example, NRPPa signaling. The base station may start the positioning of the UE in response to the transfer. As a result, for example, the base station can quickly execute the positioning of the UE.

The base station may request positioning-related capabilities from the UE. The transmission destination of the request may be the UE which is an entity that demands positioning (hereinafter may be referred to as a positioning demanding entity UE). The request may include information related to the UE from which capabilities are requested. The UE to be requested may be the positioning demanding entity UE and/or the positioning target UE. The request from the base station to the UE may be made using LPP signaling, NRPPa signaling, or RRC signaling.

The positioning demanding entity UE may request positioning-related capabilities from the positioning target UE. The request may be made in response to the capability request from the base station to the positioning demanding entity UE. The request from the positioning demanding entity UE to the positioning target UE may be made using SL. The request may be made using LPP signaling, NRPPa signaling, RRC signaling, or PCPP signaling.

The positioning target UE may notify the positioning demanding entity UE of positioning-related capabilities. The notification may be given using SL. The request may be made using LPP signaling, NRPPa signaling, RRC signaling, or PCPP signaling. The positioning demanding entity UE may acquire the capabilities of the positioning target UE using the notification.

The positioning demanding entity UE may notify the base station of positioning-related capabilities. The notification may be given, for example, as a response to the request from the base station to the positioning demanding entity UE. The notification may include the capabilities of the positioning demanding entity UE and/or the capabilities of the positioning target UE. The base station may acquire the capabilities of the positioning demanding entity UE and/or the positioning target UE using the notification.

The base station may determine settings for use in positioning. The settings may be, for example, the positioning method or the time and/or frequency resources for use in positioning, or may include two or more of the foregoing. The settings determined by the base station may be settings for the positioning demanding entity UE and/or settings for the positioning target UE.

The base station may notify the positioning demanding entity UE of the settings for use in positioning. The notification from the base station to the positioning demanding entity UE may include settings for the positioning demanding entity UE or settings for the positioning target UE. The positioning demanding entity UE may configure settings for the positioning demanding entity UE using the notification. The positioning demanding entity UE may notify the positioning target UE of the settings for use in positioning using the notification. The notification from the positioning demanding entity UE to the positioning target UE may be made using, for example, LPP signaling, NRPPa signaling, PCPP signaling, or RRC signaling. The positioning target UE may configure settings for the positioning target UE using the notification from the positioning demanding entity UE. By providing the notification from the positioning demanding entity UE to the positioning demanding notification, for example, the base station can configure settings for both the positioning demanding entity UE and the positioning target UE, and consequently the amount of processing in the positioning demanding entity UE can be reduced.

The base station may instruct the positioning demanding entity UE to start positioning. The positioning demanding entity UE may instruct the positioning target UE to start positioning in response to the instruction from the base station. The instruction from the positioning demanding entity UE to the positioning target UE may be made using, for example, LPP signaling, NRPPa signaling, PCPP signaling, or RRC signaling. The positioning demanding entity UE may start transmitting and receiving positioning signals in response to the instruction from the base station. The positioning target UE may start transmitting and receiving positioning signals in response to the instruction from the positioning demanding entity UE.

The positioning target UE may notify the positioning demanding entity UE of information related to the positioning signal reception result. The instruction from the positioning target UE to the positioning demanding entity UE may be made using, for example, LPP signaling, NRPPa signaling, PCPP signaling, or RRC signaling. The positioning demanding entity UE may notify the base station of information related to the positioning signal reception result. The notification from the positioning demanding entity UE to the base station may include information related to the positioning signal reception result in the positioning target UE. The base station may derive the position of the positioning target UE using the information included in the notification from the positioning demanding entity UE. The base station may notify the positioning demanding entity UE of information related to the derived position.

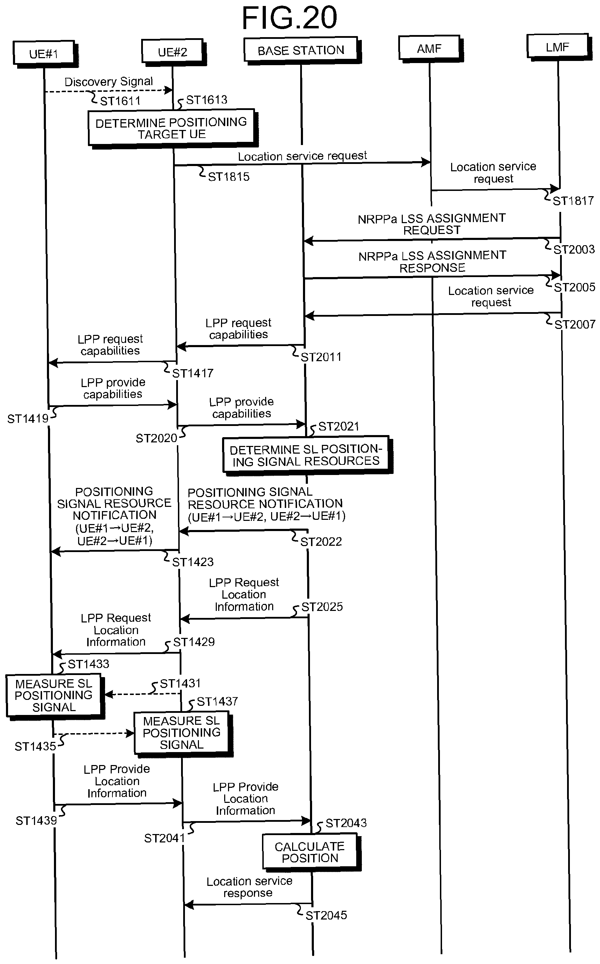

FIG. 20 is a sequence diagram illustrating another example of an operation for positioning with SL. FIG. 20 illustrates a case where UE#1 is a positioning target UE and UE#2 is a positioning demanding entity UE. The example illustrated in FIG. 20 shows that the base station performs the position calculation of UE#1. The example illustrated in FIG. 20 shows that UE#2 requests a location service from the LMF, and the LMF makes an LSS allocation to the base station. The example illustrated in FIG. 20 represents an operation in which UE#2 designates UE#1 as a positioning target UE. The example illustrated in FIG. 20 is based on the assumption that UE#1 is outside the coverage of the base station. In FIG. 20, processes identical to those in FIG. 14, 16, or 18 are denoted by the same step numbers, and descriptions already provided are omitted.

Steps ST1611 and ST1613 illustrated in FIG. 20 are similar to those in FIG. 16.

Steps ST1815 and ST1817 illustrated in FIG. 20 are similar to those in FIG. 18.

In step ST2003 illustrated in FIG. 20, the LMF makes an LSS allocation to the base station. In step ST2005, the base station transmits a response to the LSS allocation to the LMF.

In step ST2007 illustrated in FIG. 20, the LMF transfers the location service request to the base station. The transfer may be performed in response to steps ST1817 and ST2005.

In step ST2011 illustrated in FIG. 20, the base station requests positioning-related capabilities from UE#2. The request may include a request for the capabilities of UE#1 and/or UE#2.

Steps ST1417 and ST1419 illustrated in FIG. 20 are similar to those in FIG. 14.

In step ST2020 illustrated in FIG. 20, UE#2 notifies the base station of the positioning-related capabilities. The notification may include information related to the capabilities of UE#1 and/or UE#2.

In step ST2021 illustrated in FIG. 20, the base station determines positioning-related settings, specifically, resources for positioning. The settings may be settings for UE#1, settings for UE#2, or settings for both UEs.

In step ST2022 illustrated in FIG. 20, the base station notifies UE#2 of information on the resources determined in step ST2021. The settings may be settings for UE#1, settings for UE#2, or settings for both UEs. Upon receiving the notification of information on the resources in step ST2022, UE#2 configures positioning-related settings for UE#2 using the information in the notification. In addition, in step ST1429, UE#2 notifies UE#1 of the positioning-related settings (information on the resources) for UE#1 determined by the base station in step ST2021. The notification may include positioning-related settings for UE#2, for example, information on the resources of the positioning signal to be transmitted from UE#2 to UE#1. As a result, for example, UE#1 can grasp the resources required for receiving the positioning signal.

In step ST2025 illustrated in FIG. 20, the base station requests UE#2 to transmit and receive positioning signals.

Steps ST1429 to ST1439 illustrated in FIG. 20 are similar to those in FIG. 14.

In step ST2041 illustrated in FIG. 20, UE#2 notifies the base station of information related to the positioning signal reception result. The notification may include the positioning signal reception result of UE#1 and/or the positioning signal reception result of UE#2.

In step ST2043 illustrated in FIG. 20, the base station calculates the position of UE#1. In step ST2045, the base station notifies UE#2 of information related to the position calculation result of UE#1.

The example illustrated in FIG. 20 represents a case in which the base station determines the positioning-related settings of UE#1 and UE#2 in step ST2021, but UE#1 itself may determine positioning-related settings. For example, UE#1 may determine settings such as resources of the positioning signal to be transmitted to UE#2. In this case, the base station may not determine the positioning-related settings of UE#1. UE#1 may notify UE#2 of the determined settings. As a result, for example, the flexibility of positioning-related settings can be improved.

The LMF may make an LSS allocation to the base station in advance. As a result, for example, the processing from the location service request from the positioning demanding entity UE to the location service response to the UE can be quickly executed.

The LMF may notify the AMF that the LSS allocation has been made to the base station. The AMF may transfer the location service request from the UE to the base station in response to the notification. As a result, for example, signaling in the core NW can be reduced.

As another example, the base station may broadcast, to UEs, a message that the base station has been given an LSS allocation, or may notify UEs of the message individually. The UE may make a location service request to the base station in response to the broadcast and/or the notification. As a result, for example, signaling in the core NW can be reduced.

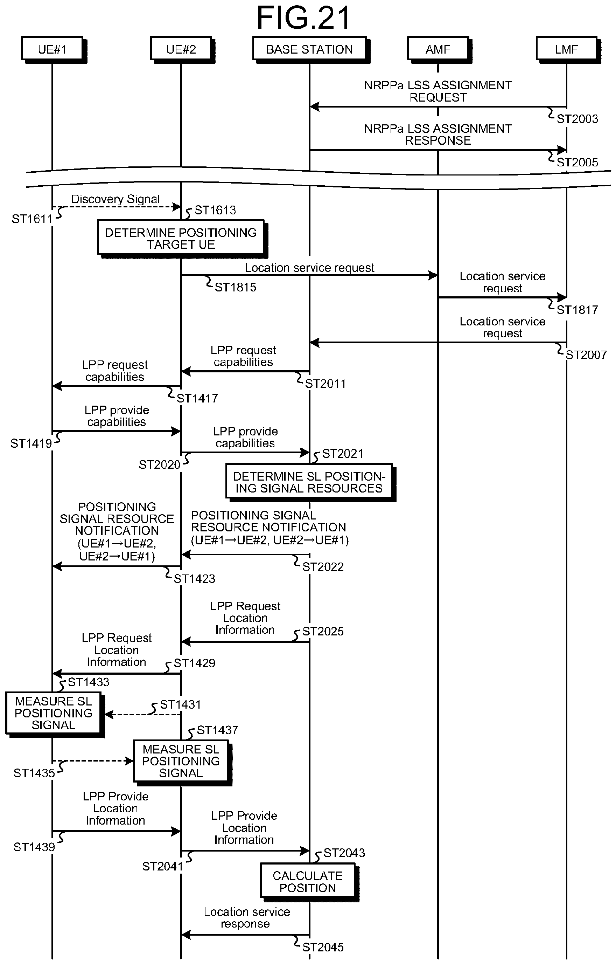

FIG. 21 is a sequence diagram illustrating another example of an operation for positioning with SL. FIG. 21 illustrates a case where UE#1 is a positioning target UE and UE#2 is a positioning demanding entity UE. The example illustrated in FIG. 21 shows that the base station performs the position calculation of UE#1. The example illustrated in FIG. 21 shows that the LMF makes an LSS allocation to the base station in advance, and UE#2 requests a location service from the LMF. The example illustrated in FIG. 21 represents an operation in which UE#2 designates UE#1 as a positioning target UE. The example illustrated in FIG. 21 is based on the assumption that UE#1 is outside the coverage of the base station. In FIG. 21, processes identical to those in FIG. 14, 16, 18, or 20 are denoted by the same step numbers, and descriptions already provided are omitted.

Steps ST2003 and ST2005 illustrated in FIG. 21 are similar to those in FIG. 20.

Steps ST1611 and ST1613 illustrated in FIG. 21 are similar to those in FIG. 16.

Steps ST1815 and ST1817 illustrated in FIG. 21 are similar to those in FIG. 18.

Steps ST2007 and ST2011 illustrated in FIG. 21 are similar to those in FIG. 20.

Steps ST1417 and ST1419 illustrated in FIG. 21 are similar to those in FIG. 14.

Steps ST2020 to ST2022 illustrated in FIG. 21 are similar to those in FIG. 20.

Step ST1423 illustrated in FIG. 21 is similar to that in FIG. 14.

Step ST2025 illustrated in FIG. 21 is similar to that in FIG. 20.

Steps ST1429 to ST1439 illustrated in FIG. 21 are similar to those in FIG. 14.

Steps ST2041 to ST2045 illustrated in FIG. 21 are similar to those in FIG. 20.

In FIG. 21, the LMF may notify the AMF that the LSS allocation has been made to the base station. The notification may be given, for example, after step ST2005. The AMF may perform step ST1817 (transmission of a location service request) on the base station using the notification. As a result, for example, step ST2007 becomes unnecessary, and consequently the amount of signaling in the core NW can be reduced, and the processing time from the transmission of the location service request by UE#2 to the reception of the location service response can be shortened.

In FIG. 21, the base station may broadcast, to UEs, a message that the base station has been given an LSS allocation, or may notify UEs of the message individually. The broadcast and/or the notification may be given, for example, after ST2005. UE#2 may perform step ST1815 on the base station in response to the broadcast and/or the notification. As a result, for example, signaling in the core NW can be reduced.

Disclosed below are other solutions. The LMF may perform the position calculation of a UE. The LMF may perform the position calculation of the UE using the reception result of positioning signals in SL. The position calculation at the LMF may be performed, for example, when one or more UEs involved in positioning are within the coverage of a base station.

The base station may determine the resources of positioning signals. The LMF may request information on the resources of positioning signals from the base station. The base station may configure settings for the frequency and/or time resources of positioning signals in response to the request. The base station may notify the positioning demanding entity UE of the settings. The base station may notify the LMF of the settings.

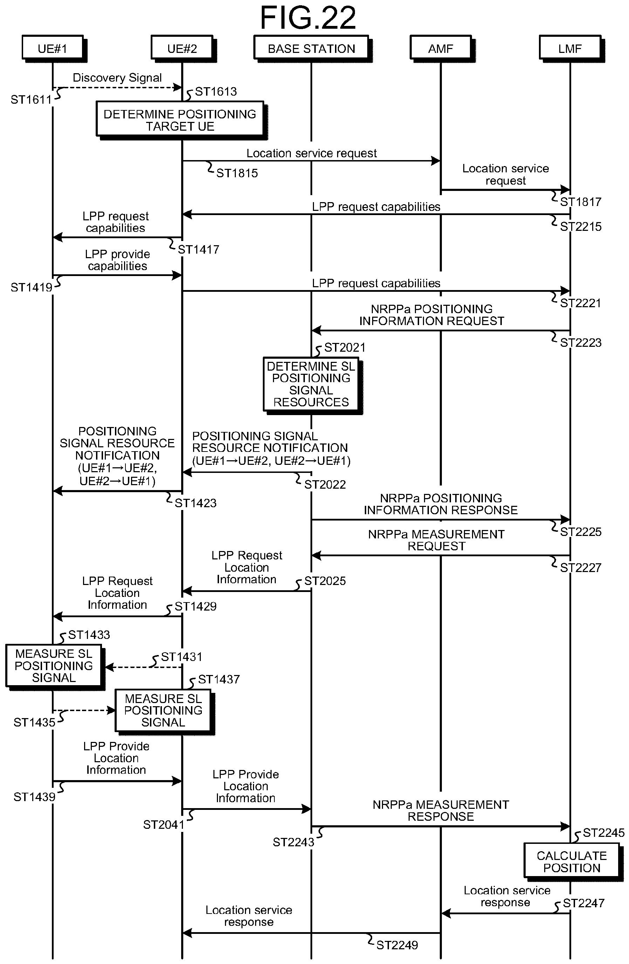

FIG. 22 is a sequence diagram illustrating another example of an operation for positioning with SL. FIG. 22 illustrates a case where UE#1 is a positioning target UE and UE#2 is a positioning demanding entity UE. The example illustrated in FIG. 22 shows that the LMF performs the position calculation of UE#1. The example illustrated in FIG. 22 shows that UE#2 requests a location service from the LMF. The example illustrated in FIG. 22 represents an operation in which UE#2 designates UE#1 as a positioning target UE. The example illustrated in FIG. 22 is based on the assumption that UE#1 is outside the coverage of the base station. In FIG. 22, processes identical to those in FIG. 14, 16, 18, 20, or 21 are denoted by the same step numbers, and descriptions already provided are omitted.

Steps ST1611 and ST1613 illustrated in FIG. 22 are similar to those in FIG. 16.

Steps ST1815 and ST1817 illustrated in FIG. 22 are similar to those in FIG. 18.

In step ST2215 illustrated in FIG. 22, the LMF requests notification of positioning-related capabilities from UE#2. The notification may be given using, for example, LPP signaling. For the request, for example, signaling of LPP request capabilities disclosed in Non Patent Literature 31 (3GPP TS36.305) may be used. The request may include information indicating that the capability notification of UE#1 and/or UE#2 is requested.

Steps ST1417 and ST1419 illustrated in FIG. 21 are similar to those in FIG. 14.

In step ST2221 illustrated in FIG. 22, UE#2 notifies the LMF of the positioning-related capabilities. The notification may be given, for example, as a response to step ST2215. The notification may be given using, for example, LPP signaling. For the notification, for example, signaling of LPP request capabilities disclosed in Non Patent Literature 31 (3GPP TS36.305) may be used. The notification may include the capabilities of UE#1 and/or UE#2.

In step ST2223 illustrated in FIG. 22, the LMF requests information on the resources of positioning signals from the base station. The request may be made using, for example, NRPPa signaling. For the request, for example, signaling of NRPPa POSITIONING INFORMATION REQUEST disclosed in Non Patent Literature 24 (3GPP TS38.305) may be used. The request may include information indicating that information on the resources of positioning signals of UE#1 and/or UE#2 is requested.

Steps ST2021 and ST2022 illustrated in FIG. 22 are similar to those in FIG. 20.

Step ST1423 illustrated in FIG. 22 is similar to that in FIG. 14.

In step ST2225 illustrated in FIG. 22, the base station notifies the LMF of information on the resources of positioning signals. The notification may be given, for example, as a response to step ST2223. The notification may be given using, for example, NRPPa signaling. For the notification, for example, signaling of NRPPa POSITIONING INFORMATION RESPONSE disclosed in Non Patent Literature 24 (3GPP TS38.305) may be used. The notification may include information on the resources of positioning signals of UE#1 and/or UE#2.

In step ST2227 illustrated in FIG. 22, the LMF instructs the base station to transmit and receive positioning signals between UE#1 and UE#2. The instruction may be given using, for example, NRPPa signaling. For the instruction, for example, signaling of NRPPa MEASUREMENT REQUEST disclosed in Non Patent Literature 24 (3GPP TS38.305) may be used. The notification may include information indicating that UE#1 and/or UE#2 transmits and receives positioning signals.

Step ST2025 illustrated in FIG. 22 is similar to that in FIG. 20.

Steps ST1429 to ST1439 illustrated in FIG. 22 are similar to those in FIG. 14.

Step ST2041 illustrated in FIG. 22 is similar to that in FIG. 20.

In step ST2243 illustrated in FIG. 22, the base station notifies the LMF of information related to the positioning signal reception result. The notification may be given using, for example, NRPPa signaling. For the notification, for example, signaling of NRPPa MEASUREMENT RESPONSE disclosed in Non Patent Literature 24 (3GPP TS38.305) may be used. The notification may include information related to the positioning signal reception result of UE#1 and/or UE#2. In step ST2245, the LMF calculates the position of UE#1.

In step ST2247 illustrated in FIG. 22, the LMF notifies the AMF of information related to the position calculation result of UE#1. In step ST2249, the AMF notifies UE#2 of information related to the position calculation result of UE#1.

Transmission and reception of positioning signals may be performed among three or more UEs and/or base stations. The positioning signal transmission and reception between base stations and UEs may be performed using, for example, a method disclosed in Non Patent Literature 24 (3GPP TS38.305). For example, by transmitting and receiving positioning signals among three parties: two UEs and one base station, it is possible to derive the distance between the UEs separately as the traveling direction component of the UEs and the vertical direction component thereof.

Transmission and reception of positioning signals may be performed among three or more UEs. In this case, one UE may be an LSS-UE. The LSS-UE may execute the positioning procedure with each of the other UEs (hereinafter may be referred to as UE1 and UE2). The LSS-UE may instruct one UE (e.g. UE1) to transmit and receive positioning signals to and from the other UE (e.g. UE2), or may instruct both UEs to transmit and receive positioning signals to and from each other.

The LSS-UE may notify UE1 of information related to the positioning signal transmission and reception between UE1 and UE2. The information may include information related to the positioning method (e.g. RTT or OTDOA) or information related to a value requested as the positioning signal reception result (e.g. propagation delay or difference between positioning signal transmission time and positioning signal reception time). For example, the LSS-UE may include the information in the positioning signal resource setting notification to UE1 (step ST1423 in FIG. 14), or may provide the information using signaling different from the positioning signal resource setting notification to UE1. The LSS-UE may provide notification to UE2 in the same manner as it does to UE1. As a result, for example, positioning signals can be transmitted and received between UE1 and UE2.

The LSS-UE may notify UE1 of an instruction to start transmitting and receiving positioning signals between UE1 and UE2. The instruction may be given as a notification included in the instruction to start transmitting and receiving positioning signals from the LSS-UE to UE1 (e.g. step ST1429 in FIG. 14). UE1 may start transmitting and receiving positioning signals to and from UE2 in response to the instruction.

UE1 may notify the LSS-UE of information related to the positioning signal reception result from UE2. For example, UE1 may include the information in the notification of the positioning signal reception result from the LSS-UE (e.g. step ST1439 in FIG. 14), or may provide the information using signaling different from the notification of the positioning signal reception result from the LSS-UE. As a result, for example, the LSS-UE can acquire the result of transmission and reception of positioning signals between UE1 and UE2.

UE1 may notify the LSS-UE of information related to the positioning signal reception result between UE1 and another UE, or may notify the LSS-UE of information related to the positioning signal reception result between other UEs. For example, the UE1 may include the information in the notification of the positioning signal reception result from the LSS-UE (e.g. step ST1439 in FIG. 14), or may provide the information using signaling different from the notification of the positioning signal reception result from the LSS-UE. As a result, for example, the LSS-UE can acquire the result of transmission and reception of positioning signals between UE1 and another UE and/or between other UEs.

As another example in which positioning signals are transmitted and received among three or more UEs, two or more UEs may be LSS-UEs. In this case, positioning may be performed using the LMF function of one LSS-UE (hereinafter may be referred to as the operation LSS-UE). UE1 or the like may determine the operation LSS-UE using an announcement message from each LSS-UE, or using a response to the solicitation message from UE1 or the like. As another example, the operation LSS-UE may be determined by coordination between the LSS-UEs.

The positioning by the operation LSS-UE may be performed in the same manner as the positioning among three or more UEs described above. The LSS-UE may notify the operation LSS-UE of information related to the positioning result the LSS-UE has. The notification of the information may be given, for example, by being included in the notification of the positioning signal reception result from the LSS-UE to the operation LSS-UE. As a result, for example, the operation LSS-UE can perform position calculation using a lot of information, and consequently the positioning accuracy can be improved.

The first embodiment thus enables positioning with SL.

### Second Embodiment.

In the first embodiment, methods for positioning with SL have been disclosed. However, there is no definition for processing in communication systems in the event that a UE finds some kind of emergency situation, e.g. UEs are too close to each other, a UE is too close to a dangerous spot, or the remaining battery level of the UE of an unmanned aerial vehicle (UAV) or the like is low. This can cause troubles such as collision between UEs and entry of a UE into a dangerous spot.

The second embodiment discloses a method for solving this problem.

The UE according to the second embodiment notifies another UE of its encounter with some kind of emergency situation. The emergency situation may be, for example, approach to a dangerous spot. The UE may give the notification, for example, when the UE exists within a predetermined range from the danger. The UE may give the notification to a following UE, for example. The UE may be, for example, an in-vehicle UE. The dangerous spot may be, for example, a spot of accident in front of the UE. The predetermined range may be, for example, within a predetermined distance rearward from the dangerous spot in the lane in the same direction as the dangerous spot.

The UE may give the notification using a result of positioning. The positioning may be, for example, positioning with GNSS, positioning performed using communication between a base station and the UE, or positioning with SL. The positioning with SL may be performed using, for example, the methods disclosed in the first embodiment.

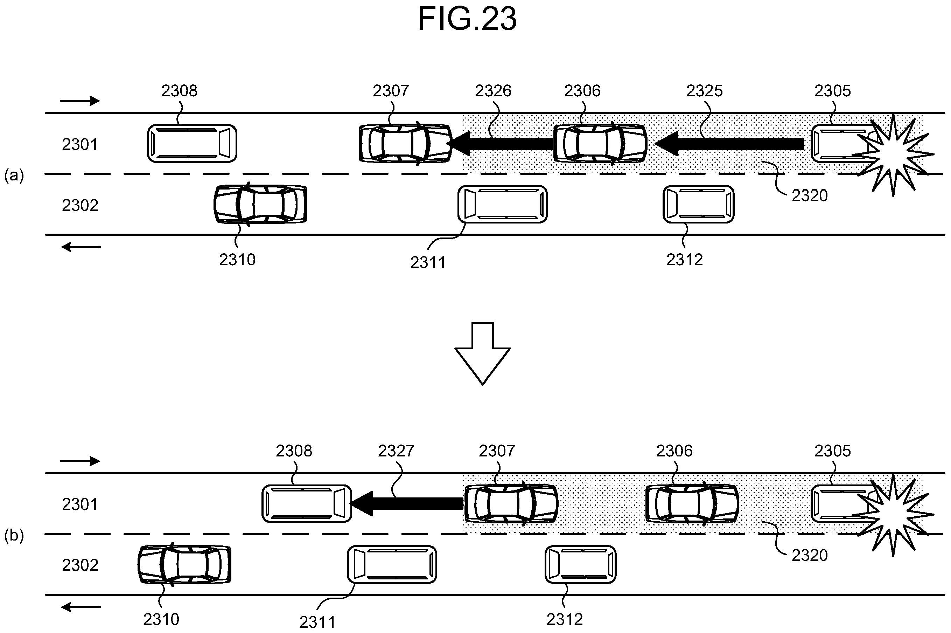

FIG. 23 is a diagram illustrating an example in which a UE notifies another UE of the approach to a dangerous spot. The example illustrated in FIG. 23 represents a case in which UEs are in-vehicle UEs. The example illustrated in FIG. 23 represents a case in which the dangerous spot is a spot of accident, and the predetermined range is set within a predetermined distance rearward in the same lane as the spot of accident. The example illustrated in FIG. 23 represents a case in which UEs located behind in the same lane are notified of the approach to the dangerous spot.

In FIG. 23, (a) represents a state at the time of occurrence of the accident, and (b) represents a state at a predetermined time after (a). FIG. 23 illustrates an example in which the traveling direction of a lane 2301 is rightward, the traveling direction of a lane 2302 is leftward, in-vehicle UEs 2305 to 2308 travel in the lane 2301, and in-vehicle UEs 2310 to 2312 travel in the lane 2302.

Suppose that the in-vehicle UE 2305 has an accident at time point (a) in FIG. 23. A hatched area 2320 indicates the above-described predetermined range. The in-vehicle UE 2305 present in the area 2320 gives the following in-vehicle UE 2306 a notification 2325 of the approach to the dangerous spot. The in-vehicle UE 2306 present in the area 2320 gives the following in-vehicle UE 2307 a notification 2326 of the approach to the dangerous spot. At time point (a), the in-vehicle UE 2307 is out of the area 2320, and thus does not notify the following in-vehicle UE 2308. In addition, the in-vehicle UEs 2310 to 2312 traveling in the lane 2302 are out of the area 2320, and thus do not notify the following UE of the approach to the dangerous spot.

At time point (b) in FIG. 23, the in-vehicle UE 2307 enters the area 2320, and thus gives the following in-vehicle UE 2308 a notification 2327 of the approach to the dangerous spot. The in-vehicle UEs 2310 to 2312 traveling in the lane 2302 are out of the area 2320, and thus do not notify the following UE of the approach to the dangerous spot.

As another example in which a UE notifies another UE of the approach to a dangerous spot, the UE may give the notification, for example, within a predetermined distance from the UE. For example, the UE may give the notification to front and/or following UEs. The UE may be, for example, an in-vehicle UE. As a result, for example, a possible collision between the UE and another UE can be provided as a notification, and consequently the collision can be avoided by the UE and/or another UE.

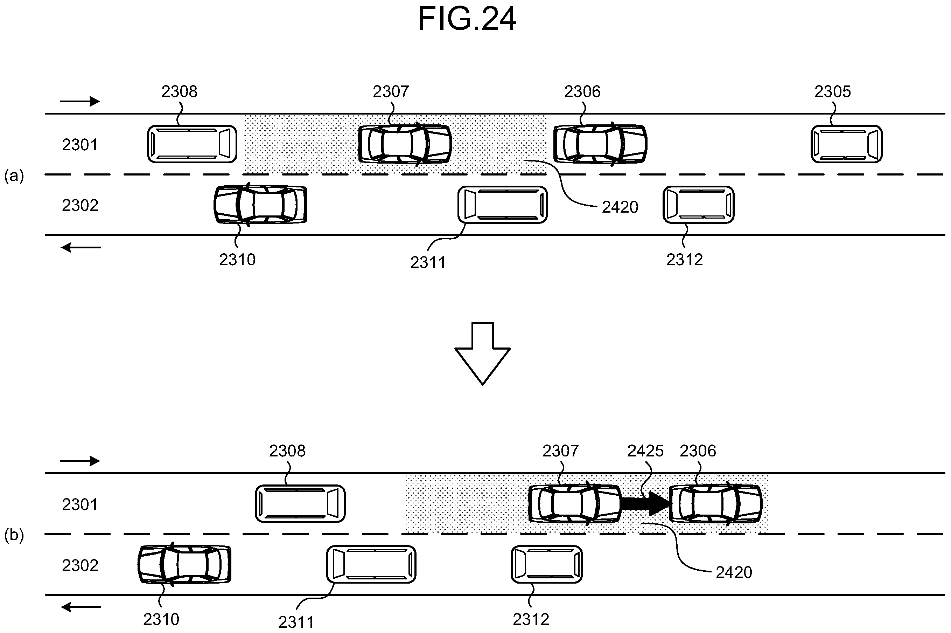

FIG. 24 is a diagram illustrating an example in which a UE notifies another UE of the approach. The example illustrated in FIG. 24 represents a case in which UEs are in-vehicle UEs. The example illustrated in FIG. 24 represents a case in which the approach of UEs to each other is provided as a notification to the front UE in the same lane. In FIG. 24, (a) represents a time point before the approach of UEs to each other, and (b) represents a time point at which the UEs approach each other. In FIG. 24, components identical to those in FIG. 23 are denoted by the same reference signs, and descriptions already provided are omitted.

At time point (a) in FIG. 24, no UE is present in a range 2420 of the predetermined distance from the in-vehicle UE 2307, and thus the in-vehicle UE 2307 does not notify other UEs.

At time point (b) in FIG. 24, the in-vehicle UE 2307 is present in the range 2420 of the predetermined distance from the in-vehicle UE 2306. Therefore, the in-vehicle UE 2307 gives the in-vehicle UE 2306 a notification 2425 of the approach to each other.

As another example of notification from a UE, the UE may give the notification to an RSU. The RSU may determine the UE to which the notification is transferred. As a result, for example, the notification can be flexibly executed in the communication system.

As another example of notification from a UE, the UE may give the notification to a base station. The base station may give the notification to another UE. As a result, for example, the resource occupancy amount of SL can be reduced.

Notification from a UE may be given in response to a predetermined event. A predetermined event may be newly provided.

As examples of predetermined events, (A) to (G) below are disclosed.
(A) Distance to a dangerous spot is a predetermined value or less and/or more.
(B) Distance to another UE is a predetermined value or less and/or more.
(C) Altitude of UE is a predetermined value or more and/or less.
(D) Remaining battery level of UE is a predetermined value or less and/or more.
(E) Received power of a predetermined signal is a predetermined value or less and/or more.
(F) Horizontal distance to another UE is a predetermined value or less and/or more.
(G) Combinations of (A) to (F).

The dangerous spot in (A) may be, for example, an accident spot or a spot where an obstacle exists. As a result, for example, the UE can quickly avoid the accident spot and/or the obstacle.

The event (B) may be provided, for example, in an in-vehicle UE, in the UE mounted on a UAV, or in another type of UE. As a result, for example, a collision with another UE can be avoided.

The event (C) may be provided, for example, in the UE mounted on a UAV. As a result, for example, it is possible to prevent the UAV from going out of the controllable range, and consequently it is possible to prevent the UAV from becoming uncontrollable.

The event (D) may be provided, for example, for the remaining battery level or the remaining fuel of an object equipped with a UE. As a result, for example, it is possible to prevent the object from running out of battery and/or running out of fuel.

The event (E) may be provided, for example, for the received power of signals emitted from the control device of a UAV. As a result, for example, it is possible to prevent the UAV from becoming uncontrollable due to failure in the reception of signals in the UAV.

The event (F) may be provided, for example, between UAVs and/or between a UAV and a helicopter or the like. As a result, for example, the UAV can avoid downwash (wind blowing down from the helicopter or the like).

The notification may be given using, for example, RRC signaling. The RRC signaling may be performed, for example, between a UE and a base station or between UEs. As a result, for example, the UE can give notification of a lot of information. As another example, the notification may be given using MAC signaling. The MAC signaling may be performed, for example, between a UE and a base station or between UEs. As a result, for example, the UE can quickly execute the notification. As another example, the notification may be given using L1/L2 signaling. The L1/L2 signaling may be performed, for example, between a UE and a base station or between UEs. As a result, for example, the UE can more quickly execute the notification.

As another example, the notification may be given using SR, SRS, or PRACH. The notification of events may be assigned a predetermined cyclic shift, a predetermined code sequence, and/or a predetermined preamble. As a result, for example, the UE can more quickly execute the notification.

As another example, the notification may be given using signaling of a positioning protocol. For example, the notification may be given using LPP signaling, NRPPa signaling, or PCPP signaling disclosed in the first embodiment. As a result, for example, it is possible to avoid complexity of location management and/or location control processing in the communication system.

Two or more of the above-described techniques may be used in combination. For example, RRC signaling may be used in some notifications, and NRPPa signaling may be used in other notifications. As a result, for example, flexibility in event-triggered notification can be improved.

Settings for the events may be configured by a base station. For example, settings for the events may be configured when the UE is within the coverage of the base station. As a result, for example, design complexity related to event-triggered notification can be avoided.

As another example, settings for the events may be configured for USIM in advance. As a result, for example, event-triggered notification is available even when the UE is out of coverage of base stations.

As another example, settings for the events may be configured by another UE. Another UE may be, for example, an RSU or a moving UE. As a result, for example, event settings can be flexibly executed even outside the coverage of base stations.

As another example, settings for the events may be configured by LMF. The settings by the LMF may be configured using, for example, LPP signaling. As a result, for example, it is possible to avoid complexity related to location management and/or location control.

Two or more of the above-described techniques may be used in combination. For example, a base station may configure some event settings, and another UE may configure other event settings. For example, for an event of approach to a dangerous spot, a base station may set a distance serving as a threshold for event detection, and another UE may set the position of the dangerous spot. As a result, for example, another UE can quickly execute settings for the events.

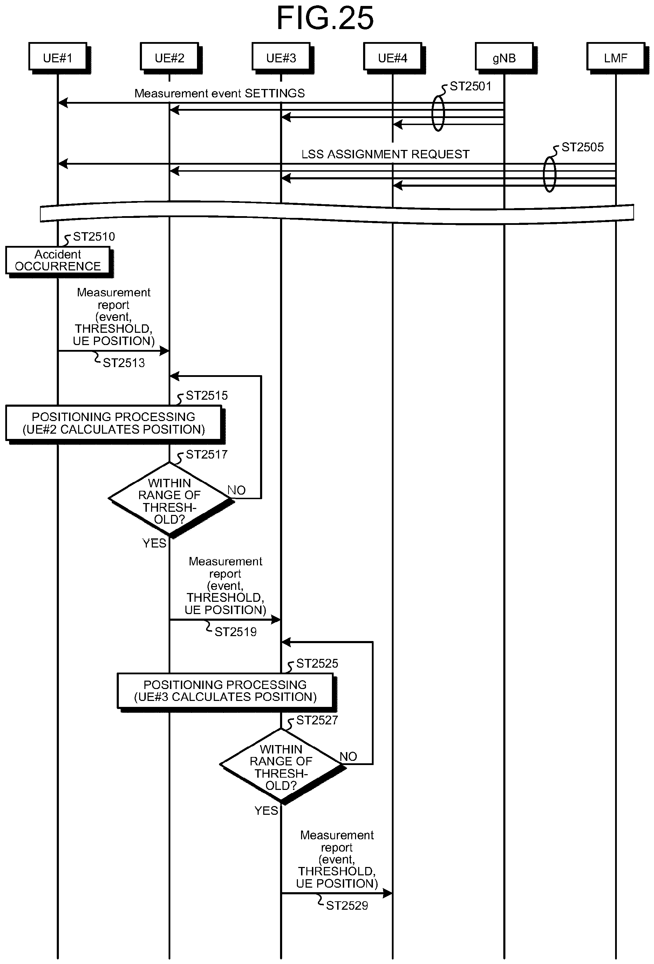

FIG. 25 is a sequence diagram illustrating an operation related to the setting, detection, and notification of an event. The example illustrated in FIG. 25 represents a case in which regarding an event of approach to a dangerous spot, a UE that has entered a predetermined range from the dangerous spot provides an event-triggered notification to the following UE. The example illustrated in FIG. 25 is based on the assumption that UE#1, UE#2, UE#3, and UE#4 are in-vehicle UEs that are traveling in this order from the front.

In step ST2501 illustrated in FIG. 25, the base station configures measurement event settings for UE#1 to UE#4. The settings may include information related to the type of event, or information related to a predetermined range serving as a threshold for event detection. The settings may be configured by unicast for each UE, by simultaneous notification to a predetermined group, or by using broadcast.

In step ST2505 illustrated in FIG. 25, the LMF may make an LSS allocation to UE#1 to UE#4. The allocation may be made using, for example, LPP signaling. The allocation may be made by unicast for each UE, by simultaneous notification to a predetermined group, or by using broadcast.

Suppose that UE#1 has an accident in step ST2510 illustrated in FIG. 25. UE#1 recognizes that the position of UE#1 is a dangerous spot. In step ST2513, UE#1 transmits a notification indicating the approach to the dangerous spot to UE#2. In the notification, UE#1 may include information indicating that UE#1 is at the dangerous spot.

In step ST2515 illustrated in FIG. 25, UE#2 measures the relative distance to UE#1. For the measurement, for example, the methods disclosed in the first embodiment may be used.

In step ST2517 in FIG. 25, UE#2 determines whether the distance from the dangerous spot to UE#2 is within the range of the threshold. For the determination, for example, information in the notification of step ST2513 may be used. In response to determining that UE#2 is not within the range of the threshold (step ST2517: No), UE#2 returns to step ST2515. In response to determining that UE#2 is within the range of the threshold (step ST2517: Yes), UE#2 performs step ST2519.

In step ST2519 illustrated in FIG. 25, UE#2 transmits a notification indicating the approach to the dangerous spot to UE#3. In the notification, UE#2 may include information indicating the distance from the dangerous spot to UE#2.

In step ST2525 illustrated in FIG. 25, UE#3 measures the relative distance to UE#2. For the measurement, for example, the methods disclosed in the first embodiment may be used.

In step ST2527 illustrated in FIG. 25, UE#3 determines whether the distance from the dangerous spot to UE#3 is within the range of the threshold. For the determination, for example, information in the notification of step ST2519 may be used, or the measurement result in step ST2525 may be used. For example, UE#3 may add the distance obtained in step ST2525 to the distance between UE#2 and the dangerous spot included in the notification received in step ST2519, and use the resultant value as the distance between UE#3 and the dangerous spot. In response to determining that UE#3 is not within the range of the threshold (step ST2527: No), UE#3 returns to step ST2525. In response to determining that UE#3 is within the range of the threshold (step ST2527: Yes), UE#3 performs step ST2529. The process in step ST2529 is similar to that in step ST2519 described above.

Although the example illustrated in FIG. 25 represents a case in which the threshold is fixed, the threshold may be variable. For example, the threshold may depend on the speed of the UE. For example, when the speed of the UE is high, the threshold may be a large value. As a result, for example, even when the speed of the UE is high, the UE can easily avoid the dangerous spot. As another example, when the speed of the UE is low, the threshold may be a small value. As a result, for example, it is possible to reduce the amount of signaling between UEs while securing the ease of avoiding the dangerous spot.

Timing advance (TA) in communication between UEs may be used for distance measurement. In response to TA falling below a predetermined value, a determination may be made that the distance between the UEs is being narrowed. As a result, for example, the UE can quickly acquire the distance to another UE, and the processing by the LMF becomes unnecessary. The predetermined value may be statically given, semi-statically given, or dynamically changed. For example, the predetermined value may be determined using the speed of the UE. As a result, for example, it is possible to efficiently avoid danger based on situations such as the speed of the UE.

The second embodiment makes it possible to notify another terminal or the like of the approach to a dangerous spot, and consequently to avoid collision, crash, or the like.

### Third Embodiment.

PRS may be used as positioning signals. The PRS may be periodic, semi-persistent, or aperiodic. A UE may request a base station to transmit PRS (see Non Patent Literature 32 (3GPP R1-2007343)).

The foregoing has the following problem. Specifically, no method has been disclosed for PRS transmission request from a UE to a base station. This results in the problem that a UE cannot request PRS transmission from a base station.

The present embodiment discloses a method for solving this problem. The UE requests PRS transmission from a base station using uplink control information (UCI). The UCI may be included in PUCCH or PUSCH.

The base station may configure settings, for the UE, as to which physical channel the UCI is included in, or as to resources with which the UE can transmit the UCI. The resource settings may include, for example, information related to the cycle or information related to the offset with respect to the cycle. The base station may notify the UE of the settings, e.g. information related to the cycle and/or offset of the UCI.

The base station may transmit PRS in response to receiving the UCI. For example, the base station may transmit PRS at the first PRS transmittable timing after the lapse of a predetermined time from the reception of the UCI. The predetermined time may be computed using, for example, the time required for DCI reception processing (e.g. demodulation and decoding) in the base station and the time required for PRS transmission processing (e.g. modulation) in the base station.

As information included in the PRS transmission request from the UE to the base station, (a) to (h) below are disclosed.
(a) Information related to the PRS transmission start/end.
(b) Information related to the PRS pattern (e.g. resource element (RE) arrangement).
(c) Information related to the PRS transmission cycle.
(d) Information related to the number of times of PRS transmission.
(e) Information related to the PRS transmission period.
(f) Information related to the band of PRS.
(g) Information related to the type of PRS.
(h) Combinations of (a) to (g).

The information (a) may be, for example, a flag indicating the start/stop of transmission, a toggle that alternately repeats the start and stop of transmission, or information indicating only the start of transmission. The information (a) may include information indicating the end of transmission. The base station may start or end the transmission of PRS using the information. As a result, for example, the base station can quickly grasp the PRS transmission start/stop request.

The information (b) may be, for example, the interval in the frequency direction of REs in which PRS is arranged, the interval in the time direction, the subcarrier position of the RE in the symbol in which PRS is arranged first, the shift amount of the subcarrier position of REs between symbols in which PRS is arranged, or two or more of the foregoing. As a result, for example, the base station can transmit PRS to the UE with appropriate resources.

The information (c) may be, for example, information in which the cycle of PRS transmission is set in units of slots or in units of symbols. The information may include information related to the subcarrier spacing. As a result, for example, the base station can transmit PRS in an appropriate cycle.

The information (d) may be given by, for example, the number of slots in which PRS is transmitted or the number of symbols. The base station may transmit a specified number of PRSs to the UE using the information. As a result, for example, it is possible to ensure transmission efficiency in the base station while improving reliability in PRS transmission.

The information (e) may be, for example, information in which the period during which PRS is transmitted is specified by the number of slots, by the number of subframes, or by the number of symbols. As another example, the start point and the end point of the time in which PRS is transmitted may be specified. As a result, for example, resource utilization efficiency in the communication system can be improved.

The information (f) may be, for example, information in which the frequency width for PRS transmission is specified in units of physical resource blocks (PRBs). As a result, for example, efficient subcarrier selection based on the receivable band of the UE is enabled.

The information (g) may indicate, for example, periodic PRS, semi-persistent PRS, and/or aperiodic PRS. As a result, for example, the PRS type can be flexibly set according to the status of radio wave propagation between the UE and the base station.

The UE may make the PRS transmission request using RRC signaling. The RRC signaling may include the above-described information items (a) to (h). As a result, for example, the UE can notify the base station of a lot of information. As another example, the UE may make the request using MAC signaling. The MAC signaling may include the above-described information items (a) to (h). As a result, for example, the UE can quickly notify the base station of the information.

A combination of the foregoing methods may be used. For example, the UE may include the above-described information items (a) to (h) in the RRC signaling for notification to the base station. The UE may request the base station to transmit PRS using UCI. The base station may transmit PRS to the UE in response to the UCI from the UE. The PRS may reflect the above-described information items (a) to (h). As a result, for example, the UE can quickly notify the base station of the PRS transmission request reflecting the above-described information items (a) to (h) .

Multiple pieces of information related to PRS settings may be provided. For example, the UE may notify the base station of multiple combinations of the above-described information items (a) to (h). The UE may notify the base station of information indicating which information to use among the multiple pieces of information (e.g. identifiers allocated to the multiple pieces of information). The multiple pieces of information may be transmitted by RRC signaling, for example, and the information indicating which information to use may be transmitted using MAC signaling or UCI, for example. As a result, for example, switching between a plurality of PRS settings can be flexibly and quickly executed.

The UE may request the LMF to configure PRS transmission settings. The request may be made using, for example, LPP signaling or NRPPa signaling. The above-described information items (a) to (h) may be included in the request from the UE to the LMF. The LMF may configure the PRS transmission settings using the request. The LMF may notify the base station of the PRS transmission settings. As another example, the LMF may instruct the base station to configure PRS transmission settings. The base station may configure the PRS transmission settings in response to the instruction. As a result, for example, complexity in the management of positioning-related settings in the communication system can be avoided.

The third embodiment enables the PRS request from the UE to the base station, and consequently enables quick positioning between the UE and the base station.

### Fourth Embodiment.

Resources for SL communication may be used from a predetermined resource pool (see Non Patent Literature 33 (3GPP TR37.985)). A resource pool may be provided for each of predetermined zones. The predetermined zones may be defined using, for example, latitude and/or longitude. When a UE is out of coverage of base stations, transmission and reception resources may be used from the resource pool. Positioning with SL may be performed using resources selected from the resource pool.

The foregoing has the following problem. Specifically, in a case where a plurality of UEs are present across different zones, the transmission-side UE (hereinafter may be referred to as UE-TX) and the reception-side UE (hereinafter may be referred to as UE-RX) have different resource pools, and consequently the transmission resources of the UE-TX and the reception resources of the UE-RX differ, resulting in the problem that positioning between the UE-TX and the UE-RX is impossible.

The fourth embodiment discloses a method for solving this problem.

The UE-RX is capable of receiving signals of the resource pool of an adjacent zone. The number of adjacent zones may be one, e.g. the zone closest to the UE-RX, or may be two or more. For example, four resource pools adjacent in four directions may be provided, or eight resource pools adjacent in four directions and diagonal directions may be provided.

Disclosed below are other solutions. A plurality of zones are provided at one point. That is, overlapping zones are provided. For example, the center of a certain zone may serve as a boundary of another zone.

The UE-TX may perform transmission using the resource pools of a plurality of zones to which the UE-TX belongs. As a result, for example, UE-TX signals can be received even at a narrowband UE. As another example, the UE-TX may perform transmission using the resource pool of any of a plurality of zones to which the UE-TX belongs. As a result, for example, the power consumption of the UE-TX can be reduced.

The UE-RX may perform reception operation using the resource pools of a plurality of zones to which the UE-RX belongs. As a result, for example, in cases where the UE-TX uses the settings of the resource pool of any zone, signals can be received from the UE-TX. As another example, the UE-RX may perform reception operation using the resource pool of any of a plurality of zones to which the UE-RX belongs. As a result, for example, the power consumption related to the reception operation can be reduced.

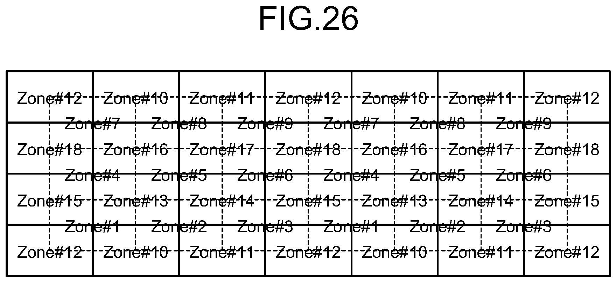

FIG. 26 is a diagram illustrating an example case in which overlapping zones are provided. In FIG. 26, the centers of Zones #1 to #9 indicated by dotted squares serve as boundaries of Zones #10 to #18 indicated by solid squares.

In FIG. 26, for example, suppose that the UE-TX belongs to Zones #1 and #13 and the UE-RX belongs to Zones #2 and #13. In this case, the UE-TX may perform transmission using either of the resource pools in Zones #1 and #13. The UE-RX may perform reception operation using the settings of the resource pools of Zones #1 and #13. As a result, for example, positioning signals can be transmitted and received between the UE-TX and the UE-RX using the resource pool settings of Zone #13.

The fourth embodiment makes it possible to transmit and receive positioning signals between the UE-RX and the UE-TX across different resource pool zones.

### Fifth Embodiment.

In SL communication, V2X layer may be used (see Non Patent Literature 22 (3GPP TS23.287)). The V2X layer may be provided, for example, above the SDAP layer.

The foregoing has the following problem. Specifically, in positioning with SL, the positional relationship between the LPP layer, the NRPPa layer, and the V2X layer for use in positioning is not clear. This causes the problem that the positioning procedure does not operate in SL communication between UEs provided by different vendors, for example.

The present embodiment discloses a solution to this problem.

Specifically, in the communication system according to the present embodiment, LPP and NRPPa are placed above the V2X layer. Signaling of the LPP layer and the NRPPa layer may be encapsulated in signaling of the V2X layer. As a result, for example, QoS control of positioning signaling is enabled in SL communication, and complexity in designing the LPP and NRPPa layers can be avoided.

Disclosed below are other solutions. The V2X layer is placed above the LPP layer and the NRPPa layer. Signaling of the V2X layer may be encapsulated in signaling of the LPP layer and the NRPPa layer. As a result, for example, QoS control of positioning signaling is enabled in SL communication, and complexity in designing the V2X layer can be avoided.

Disclosed below are other solutions. The V2X layer may be integrated with the LPP layer and the NRPPa layer. For example, the V2X layer may include a positioning function, or a new positioning protocol, e.g. the PCPP layer disclosed in the first embodiment, may be provided. As a result, for example, QoS control of positioning signaling is enabled in SL communication, and complexity in designing the LPP and NRPPa layers can be avoided.

Disclosed below are other solutions. The V2X layer may not be used. For example, the LPP layer and the NRPPa layer may be placed above the PC5-RRC layer (see Non Patent Literature 22 (3GPP TS23.287)). For example, LPP signaling and NRPPa signaling may be encapsulated in PC5-RRC signaling. As a result, for example, design complexity in the V2X layer, the LPP layer, and the NRPPa layer can be avoided.

As another example, the foregoing PCPP layer may be placed above the PC5-RRC layer. The PCPP layer may not be integrated with the V2X layer. As a result, for example, design complexity in the V2X layer, the LPP layer, and the NRPPa layer can be avoided.

The fifth embodiment makes it possible to avoid inconsistency between protocol stacks related to the positioning procedure in SL communication between UEs provided by different vendors, and consequently to execute the positioning procedure.

In the present disclosure, a UE-TX is defined as a UE in which service data is generated. For example, given that a UE-TX is UE1 and a UE-RX is UE2, in cases where service data is generated in UE2 and data is transmitted to UE1, the method of the present disclosure can be applied by treating UE2 as a UE-TX and UE1 as a UE-RX. As a result, a similar effect can be obtained.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

Although the present disclosure has been described in detail, the above description is illustrative and not restrictive in all aspects. Numerous modifications not illustrated are considered as assumable.

### Reference Signs List

200, 210 communication system; 202 communication terminal device (communication terminal); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other base station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 Idle State mobility management unit; 521 Data Network communication unit; 525-2 PDU session control unit; 527 session management unit; 751-1 to 751-8 beam.

## Claims

1. A communication terminal capable of sidelink communication for directly communicating with another communication terminal, wherein
when the communication terminal is present in coverage of a base station, the communication terminal is given an allocation for executing, on behalf of a higher-level device in a core network, all or part of a location management function including a position derivation function, the position derivation function being a function of deriving a position of a communication terminal, the communication terminal executing, on a basis of a result of the sidelink communication with another communication terminal, a positioning function of deriving a position of the other communication terminal, instead of the higher-level device.

2. The communication terminal according to claim 1, wherein
in a state in which the communication terminal is given an allocation for executing the positioning function on behalf of the higher-level device, the communication terminal broadcasts, to another communication terminal, a message that the positioning function is executable.

3. The communication terminal according to claim 1, wherein
in a state in which the communication terminal is given an allocation for executing the positioning function on behalf of the higher-level device, the communication terminal broadcasts, to another communication terminal, a message that the positioning function is executable in response to receiving from the other communication terminal an inquiry as to whether the positioning function is executable.

4. The communication terminal according to any one of claims 1 to 3, wherein
in a state in which the base station has been given by the higher-level device an allocation for executing all or part of the location management function on behalf of the higher-level device,
the communication terminal is given by the base station an allocation for executing the positioning function on behalf of the higher-level device.

5. The communication terminal according to claim 1, wherein
in response to receiving from another communication terminal a discovery signal for searching for a communication terminal capable of the sidelink communication, the communication terminal is given by the higher-level device an allocation for executing the positioning function on behalf of the higher-level device.

6. The communication terminal according to any one of claims 1 to 5, wherein
in a case where a distance from a position of another communication terminal to the communication terminal is equal to or less than a threshold, the position of the other communication terminal having been derived by the execution of the positioning function, the communication terminal notifies surroundings of approach to the other communication terminal.

7. The communication terminal according to any one of claims 1 to 6, wherein
the communication terminal uses a reception result of a positioning reference signal in a process of deriving a position of the other communication terminal with the positioning function.

8. A communication system comprising:
a plurality of communication terminals capable of sidelink communication for directly communicating with another communication terminal; and
a base station having the communication terminals connected thereto, wherein
the base station is given an allocation for executing, on behalf of a higher-level device in a core network, all or part of a location management function including a position derivation function, the position derivation function being a function of deriving a position of a communication terminal, the base station executing, on a basis of a result of the sidelink communication between another communication terminal and a positioning target terminal being one of the plurality of communication terminals, a positioning function of deriving a position of the positioning target terminal, instead of the higher-level device.

9. The communication system according to claim 8, wherein
in response to a communication terminal different from the positioning target terminal receiving a discovery signal transmitted from the positioning target terminal for searching for a communication terminal capable of the sidelink communication, the communication terminal is given by the higher-level device an allocation for executing the positioning function on behalf of the higher-level device.

10. A communication system comprising:
a plurality of communication terminals capable of sidelink communication for directly communicating with another communication terminal;
a base station having the communication terminals connected thereto; and
a higher-level device having a location management function including a position derivation function that is a function of deriving a position of the communication terminals, wherein
the communication terminals notify the higher-level device of a result of the sidelink communication with a positioning target terminal, and
the higher-level device derives a position of the positioning target terminal on a basis of the result provided by the communication terminals.
